# EUROPÄISCHE PATENTSCHRIFT

(11) **EP 4 479 659 B1**
(45) Veröffentlichungstag und Bekanntmachung des Hinweises auf die Patenterteilung: **08.04.2026**
(21) Anmeldenummer: 23706991.9
(22) Anmeldetag: 13.02.2023
(51) Int. Cl.: F16D 66/00

(54) **BREMSLASTMESSEINRICHTUNG FÜR EINE ELEKTRISCHE KRAFTFAHRZEUGRADBREMSE, HERSTELLUNGSVERFAHREN DAZU UND ELEKTRISCHE KRAFTFAHRZEUGRADBREMSE MIT BREMSLASTMESSEINRICHTUNG**
BRAKE LOAD MEASUREMENT DEVICE FOR AN ELECTRIC MOTOR VEHICLE WHEEL BRAKE, MANUFACTURING METHOD THEREOF AND ELECTRIC MOTOR VEHICLE WHEEL BRAKE WITH BRAKE LOAD MEASUREMENT DEVICE
DISPOSITIF DE MESURE DE CHARGE DE FREINAGE POUR FREIN DE ROUE DE VÉHICULE À MOTEUR ÉLECTRIQUE, PROCÉDÉ DE FABRICATION DE CELUI-CI ET FREIN DE ROUE DE VÉHICULE À MOTEUR ÉLECTRIQUE AVEC DISPOSITIF DE MESURE DE CHARGE DE FREINAGE

(30) Priorität: 14.02.2022 DE 102022201513; 28.11.2022 DE 102022212689
(43) Veröffentlichungstag der Anmeldung: 25.12.2024
(73) Patentinhaber: AUMOVIO Germany GmbH, 60488 Frankfurt am Main (DE)
(72) Erfinder: SCHULITZ, Matthias, 30175 Hannover (DE); FEIGEL, Hans-Jörg, 30175 Hannover (DE); VEY, Christian, 30175 Hannover (DE)
(74) Vertreter: Aumovio Corporation
(86) Internationale Anmeldenummer: PCT/DE2023/200031
(87) Internationale Veröffentlichungsnummer: WO 2023/151769

(56) Entgegenhaltungen:
- DE-A1- 102009 041 951
- DE-A1- 102013 224 922
- DE-B3- 102015 219 058
- KR-A- 20210 148 283
- US-A1- 2004 159 512
- US-A1- 2013 233 065
- US-A1- 2013 313 055

## Beschreibung

Die Erfindung bezieht sich auf eine neuartige Bremslastmesseinrichtung für eine elektrische Kraftfahrzeugradbremse vom Reibungsbremstyp und weiterhin auf eine entsprechende elektrische Kraftfahrzeugradbremse umfassend die Bremslastmesseinrichtung. Die Erfindung ist rein beispielhaft im Einzelnen näher anhand von einer Trommelbremsverwendung erläutert. Ganz grundsätzlich ist auch eine Applikation in Verbindung mit anderen Bremsentypen, wie insbesondere in Verbindung mit Scheibenbremsen, möglich sowie sinnvoll. Eine generelle Kinematik der gattungsgemäßen Bremslastmesseinrichtung bzw. Radbremse ist dabei so, dass zumindest eine Komponente der Bremslastmesseinrichtung, wie beispielsweise ein Aufnahmegehäuse oder Aufnahmegehäuseteil, kraftfahrzeugfest gelagert ist, und wobei die Radbremselemente wie insbesondere Bremsbacken eine elektrische Bremslastsensoreinheit der Bremslastmesseinrichtung mittelbar oder unmittelbar beaufschlagen. Die Offenbarung der vorliegenden Erfindung schließt ausdrücklich neuartige industrielle Herstellungsverfahren für neuartige automobile Bremslastmesseinrichtungen ein.

Eine Bremslastmesseinrichtung mit optischer Bremslastsensorik in Verwendung für eine Fahrzeugbremse ist in der EP 0 388 040 A2 angegeben. Die Fahrzeugbremse verfügt dazu über ein festes, bremskraftaufnehmendes Teil (Bremsstator), das mindestens ein Reibungselement und ein Betätigungsglied trägt, welches zum Pressen des Reibungselementes in bremsenden Eingriff mit einer drehbaren Bremsoberfläche (Bremsrotor) geeignet und bestimmt ist, und wobei ein auslenkbares Mittel definiert ist, das in dem Kraftübertragungsweg zwischen dem Reibungselement und dem Bremsstator derart arrangiert ist, dass es der Last ausgesetzt ist, die durch das Reibungselement während des Bremsens tritt, und wobei das auslenkbare Mittel durch die Bremslast ausgelenkt ist. Weiterhin ist die Fahrzeugbremse über zwei optische Fiberkabel mit einer distanziert angeordneten elektronischen Einheit verbunden, und wobei ein optisches Fiberkabel dazu dient, dass eine lichtemittierende Diode in der elektronischen Einheit das auslenkbare Mittel der Fahrzeugbremse bestrahlt. Ein lastabhängig reflektierter, respektive abgelenkter, Strahlungsteil wird über das andere optische Fiberkabel zurück an die elektronische Einheit gemeldet, die über elektrische Bremslastsensorik verfügt, um ein elektrisches Ausgangssignal zur weiteren Verwendung in einem Fahrzeugsystem abzugeben. Im Ergebnis ist demzufolge eine korrekte elektrische Funktionsfähigkeit des diskret aufgebauten Messsystems erstmals überprüfbar, wenn eine Montage aller Komponenten im zugeordneten Kraftfahrzeug (ergo bei einem Fahrzeughersteller) stattgefunden hat, was beispielhaft aus Qualitätssicherungsgründen, als nachteilig empfunden wird.

KR 2021 0148283 A offenbart eine Bremslastmesseinrichtung für eine Kraftfahrzeugbremse nach dem Oberbegriff des Anspruchs 1.

Aus der DE 10 2018 202 261 A1 geht eine besondere Kraftfahrzeugtrommelbremse mit definiert eingefügter Lagerelastizität im Bereich einer Bremsschuhabstützung hervor.

KR 2021014828 A1 bezieht sich auf eine Lastmesseinrichtung einer Trommelbremse wobei Innenstirnseiten von Kolben (11) über je eine Feder an einer Stufe (12) im Zylinder (5) abgestützt sind, und dass von der Außenseite des Zylinders (5) ein hohler Zapfen (8) absteht, der eine Öffnung in der Trägerplatte (1) durchdringt, so dass er in einen Aufnahmeraum in einem an der Trägerplatte (1) anliegenden Achsschenkel (18) oder in einem am Achsschenkel (18) befestigten Verstärkungselement aufnehmbar ist.

Aus der DE 10 2020 133 109 A1 geht eine besondere Messwiderlagerkonstruktion hervor. Diese umfasst einen biegebalkenartig zwischen einem Widerlagersockel und einem Widerlagerkopf elastisch nachgiebig angeordneten Arm als biegeverformbares Bauteil, und wobei ausgehend vom Widerlagerkopf eine integral gelagerte Messstange in Richtung Sockel vorliegt, und mit einem endseitigen Signalgeber ausgerüstet ist. Unterhalb des Widerlagersockels befindet sich eine gesondert angebaute Bremslastsensorbaugruppe mit Signalnehmer, welcher mit dem Signalgeber der Messstange kooperiert.

Die WO 2020/239586 A1 beschreibt eine Bremslastmesseinrichtung für eine Trommelbremse mit anderem Messprinzip. Dabei weist das Widerlager ein zylinderförmiges Gehäuse mit einer Aufnahmequerbohrung auf, in der zwei Kolben relativ bewegbar geführt sind. Zentral in der Aufnahmequerbohrung ist ein Boden vorgesehen, wobei jeder Kolben über je eine Feder auf dem Boden abgestützt ist, und die beiden Sensierungen der Kolben erfolgt jeweils deaxiert außerhalb der Flucht sowie dezentral.

Die Erfindung beruht demgegenüber auf der Aufgabe, eine neuartig weiterentwickelte Trommelbremse respektive ein verbessertes Lastmessprinzip anhand einer konstruktiv variabel und dennoch robust ausgelegte Bremslastmesseinrichtung vorzulegen, welche eine verbesserte Herstellung, Logistik sowie Montage bei günstigen Schnittstellen verspricht, und wobei zudem unter vertretbar angemessenem Aufwand hinreichend präzise Messdaten gewonnen werden können.

Der Begriff Bremslastmesseinrichtung versteht sich für die vorliegende Erfindung gleichermaßen bezogen auf Radbremskraft oder Radbremsmoment - je nachdem was für die jeweilige Applikation im Betriebsbremsregelbetrieb vorgezogen ist. In der nachfolgenden Beschreibung soll daher im Wesentlichen von einem wirksam gemessenen Betriebsbremsmoment gesprochen werden. Eine erfindungsgemäße Bremslastmesseinrichtung kann integral wie insbesondere zentral eine elektrische Lastmesskomponente aufnehmen und/oder lagern. Die Bremslastmesseinrichtung kann zum elektrischen Anschluss der Lastmesskomponente an ein Fahrzeugbordnetz über eine elektrische Steckschnittstellenkomponente verfügen.

Die bremsseitige Steckschnittstellenkomponente kann ein Durchgangsloch in einem Bremsstator zumindest teilweise durchgreifen. In Konfiguration als Durchsteckschnittstelle kann diese besonders vorteilhaft in Gestalt von einer Steckbuchse ausgeführt sein, und wobei eine Fassung der Steckbuchse (weibliche Komponente) eine Durchgangsöffnung in einem Bremshalter, Ankerplatte, Schmutzblech oder ähnlichem Bremskapselungselement von innen nach außen in Richtung Umgebungsatmosphäre durchgreifen darf. In noch näherer Ausgestaltung kann definiert sein, dass die Steckbuchse über ein Paar elektrische Anschlusszungen zur Paarung mit einem fahrzeugseitigen Paar zugeordneter Anschlussstecker (männliche Komponente) eines Bordnetzkabelbaums als zugeordnete Stechschnittstellenkomponente verfügt. Eine umgekehrte Allokierung von männlicher und weiblicher Komponente ist auch möglich, um eine andere draht- bzw. kabelgebundene Schnittstellenkonfiguration auszubilden.

Die Erfindung betrifft eine Bremslastmesseinrichtung nach Anspruch 1. Erfindungsgemäß ist eine elektrische Bremslastmesseinrichtung demzufolge als eine einfach handhabbare sowie ohne Medienbruch/Medienwechsel unmittelbar mit einem elektrischen Fahrzeugsystem verbindbare Baueinheit arrangiert, und wobei die Funktionsfähigkeit der einzelnen Radmessbaueinheit in besonders vorteilhafter arbeitsteiliger industrieller Herstellung (bei einem Komponentenzulieferunternehmen) einfach elektrisch überprüfbar ist, ohne dass eine vollständige Bremssystemmontage zwecks Komponententest ausgeführt werden müsste. Demzufolge definiert die vorliegende Erfindung erstmals eine neuartig-zeitgemäße Modulbauweise in Verbindung mit elektrischer Lastsensorik. Die Erfindung bezieht sich auch auf eine Radbremse vom Reibungstyp mit im Weitesten Sinne elektrischer Bremslastmesseinrichtung. Alle Reibungsbremsen umfassen drehbare Komponenten (Bremsrotor, d.h. Bremsscheibe, Bremstrommel o.ä.) und drehfest, d.h. fahrzeugfest gelagerte Komponenten (Bremsstator, d.h. Bremsträger, Bremsankerplatte o.ä.). Die Radbremse ist folglich generell als Scheibenbremse oder Trommelbremse ausgestaltbar, und bei Trommelbremsen kann vorteilhafterweise ein Simplextyp oder Servobremstyp vorliegen. Es ist möglich, dass die Trommelbremse als eine Multi- oder Dual-Mode-Trommelbremse vorliegt, welche bspw. schaltbar oder funktionsgebunden unterschiedliche Betriebsmodi einnehmen kann. Die Kraftfahrzeugtrommelbremse kann als eine Betriebsbremse vorliegen oder in Ausgestaltung als eine kombinierte Trommelbremse, welche neben der Betriebsbremsfunktion weiterhin eine Feststellbremsfunktion wahrnimmt.

Jede Kraftfahrzeugtrommelbremse umfasst als Rotor eine Bremstrommel und zwei drehfest gelagerte spreizbare Bremsbacken, die an die Bremstrommel anlegbar sind. Die Bremsbacken können auf einer Bremsbackenseite einer Ankerplatte drehfest gehalten sein. Bremsbacken können über jeweils ein erstes und ein zweites Ende verfügen, die Auflager bzw. Nasen aufweisen, wobei sich zwischen ersten Enden der Bremsbacken wenigstens eine Spreizeinrichtung befinden kann, und gleichzeitig mit der Spreizeinrichtung ein sogenanntes Widerlager gebildet sein kann, an dem die genannten Auflager/Nasen drehfest abstützbar sind. Zwischen den zweiten Enden kann ein schwimmend gelagertes Übertragungsmittel und/oder eine automatische längenverstellbare Teleskopeinrichtung (Bremsverschleißnachstellvorrichtung) vorliegen.

Bei einer Trommelbremse, wie insbesondere einer Duo-Servo-Trommelbremse, können schwimmend verstellbar in einer Bremstrommel aufgenommene Bremsbacken vorliegen. Dabei wird der Effekt ausgenutzt, dass ein in sich ringförmig geschlossener Kraftflusskreis (vergleichbar einer formschlüssigen Verkeilung zwischen den beiden Bremsschuhen) innerhalb der Radbremse vorliegt, wenn ausgehend von einem statorfesten Aktuatorstellkraft über die unmittelbar direkt betätigte Bremsbacke eingeleitet ist, die infolgedessen zur Bremstrommelanlage gelangt, um bei Druckstrebenabstützung an der indirekt betätigten Bremsbacke diese in Anlage an die Bremstrommel zu drücken, bis sich dieser "innere" Kraftfluss zwecks Kreisschließung über das statorfest allokierte Widerlager im/am Bremsstator schließt. Das Ergebnis ist gewissermaßen eine selbsttätige stromlose Verkeilung was insbesondere für Feststellbremszwecke nachgesucht ist. Konstruktive innere Übersetzung fungiert mit Selbstverstärkungseffekt, so dass sich die Radbremse bei Wegrolltendenz zunehmen selbsttätig mit steigender Spannkraft verkeilt, ohne dass dafür zusätzliche Aktuatorkraft benötigt wird. Dadurch ergeht - je nach Rotordrehrichtung, d.h. Trommeldrehrichtung der zu bremsenden Radbremse - eine primäre Beanspruchung auf der einen oder einer anderen Seite. Eine erfindungsgemäße Bremslastmesseinrichtung sieht nun vor, Bremskräfte respektive Bremsmomente im Betrieb und/oder bei Feststellbremsung zwecks Regelung elektrischer Betriebsbremseingriffe und/oder elektrischer Feststellbremseingriffe zu bestimmen. Die Erfindung ist demzufolge gleichermaßen geeignet und bestimmt für reine Betriebsbremsen, für reine Feststellbremsen wie prinzipiell auch für sogenannte kombinierte Bremsen welche elektrische Betriebsbremse und elektrische Feststellbremse kombiniert beinhalten. Dabei versteht es sich, dass an Stelle einer bevorzugt vollelektrischen Betriebsbremsaktuatorik prinzipiell auch eine elekrohydraulische Betriebsbremsaktuatorik vorliegen darf, ohne den wirklichen Kern der vorliegenden Erfindung zu verlassen. Die Bremslastmesseinrichtung kann gleichzeitig als Bremsbackenwiderlager gestaltet sein, sowie die Sensoreinrichtung kooperieren, die zur Bestimmung der, während einer Bremsung auf das integrale Widerlager einwirkenden Kräfte, dient.

Die erfindungsgemäße Bremslastmesseinrichtung weist ein im Wesentlichen starr eingefügtes Gehäusebauteil mit Lagerbockfunktion auf. Das Gehäusebauteil ist im Wesentlichen zentral zwischen Bremsbacken allokiert sein. Das Gehäusebauteil kann beispielhaft als ein gesondertes und austauschbares Bauteil mit einer lösbaren Befestigungsschnittstelle (bspw. mit Verschraubung(en)) mittelbar oder unmittelbar an einem Bremshalter (mit Schnittstelle zu einem Fahrzeugachsschenkel) platziert ausgebildet sein, wie vorbildhaft in der Zeichnung dargelegt, oder die Bremslastmesseinrichtung ist ohne ein gesondertes Gehäusebauteil an oder in (beispielsweise einem Hohlraum) des besagten Bremshalters integriert definiert. Das Gehäusebauteil kann eine Gehäusekavität aufweisen, um Komponenten oder Bauteile aufzunehmen. Das Gehäusebauteil nimmt ein oder mehrere Sensormittel (DMS) auf und kann eine dem/den Sensormittel(n) zugeordnete hochtemperaturtolerant gestaltete Elektronik (ECU) integral aufnehmen. Sensormittel und ECU können prinzipiell gesonderte Baueinheiten ausbilden, die und voneinander räumlich distanziert, entkoppelt sind, also getrennt dargestellt sind. Gleichzeitig sind Sensormittel und ECU über elektrische Leitungen elektrisch leitend miteinander verbunden. Alternativ sind Sensormittel und ECU räumlich miteinander so vereinigt, dass diese eine einzige handhabbare Baueinheit ausbilden. Die Gehäusekavität kann für jegliche Ausgestaltung beliebig und beispielhaft als ein Sackloch und/oder als Durchgangsbohrung ausgebildet sein, und weitgehend zentral, fluchtend wie insbesondere mittig zwischen den Bremsbacken arrangiert sein, die so oder vergleichbar in einer bevorzugten Ausgestaltung laut Zeichnung wiedergegeben ist.

Das Gehäusebauteil kann eine im Wesentlichen parallel zu einer Raddrehachse allokierte Sacklochbohrung und eine dazu rechtwinklig (T-förmig) dazu Aufnahmequerbohrung aufweisen, deren Ausrichtung im Wesentlichen mittig zwischen den Bremsschuhauflagern fluchtet. Sacklochbohrung und Aufnahmequerbohrung sind orthogonal zueinander gerichtet. Die Sacklochbohrung darf in die Durchgangsbohrung einmünden.

Ein Gehäusebauteil der Bremslastmesseinrichtung, oder zumindest eine mit der ECU verbundene Komponente davon, darf über eine elektrische Schnittstelle verfügen. Die elektrische Schnittstelle kann im Bereich von einer Bremshalterung/Sockel platziert vorliegen. Der Sockel kann dabei beispielhaft zur Fixierung an einer Außenseite einer Ankerplatte dienen. Im Sinne einer Überbrückungsmaßnahme kann das Gehäusebauteil über einen Gehäusevorsprung verfügen, welcher hohl gefertigt ist, indem in seinem Zentrum die Sacklochbohrung definiert ist. Der Gehäusevorsprung durchgreift nach einer Ausführungsform eine Ausnehmung der Bremsankerplatte (Bremsstator).

Nach dem erfindungsgemäß konkretisiert vorgelegten Prinzip ist ein Bremslastmessfühler als ein Kolbenanschlag zentral sowie fluchtend zwischen zwei Kolben (Druckstücke) in die Queraufnahmedurchgangsbohrung derart eingefügt, dass die beiden Kolben in Fluchtung zueinander diametral beidseits gegenüberliegend (Boxermotorprinzip) von beidseits auf den Bremslastmessfühler aufsitzen. Anhand des erfindungsgemäß vorgestellten Messarrangements, bei zentral-fluchtend zwischen den Kolben im Gehäuse relativverschiebbar integriert arrangierter Messstelle, sind potentiell messverfälschende Störeinflüsse wie insbesondere beispielhaft Nullpunktdrift und/oder Nullpunktabgleich, Bauteil- und/oder Fertigungstoleranz, Temperaturwechseldehnungseinflüsse, Reibungs- und/oder Querkrafteinflüsse respektive Wechselwirkungen daraus automatisch kompensiert bzw. zumindest effektiv-zielführend auf ein verträgliches Maß beschränkt. In Weiterbildung der Erfindung ist der Bremslastmessfühler verblüffend rationell als gesondert auswechselbare Komponente, wie nämlich als doppelseitig wirkender Kolben(vorschub)anschlag, fluchtend in das Zentrum der Aufnahmequerbohrung eingefügt.

Ein erfindungsgemäß implementierter Bremslastmessfühler darf elektrische Messsensorik, wie insbesondere beispielhaft eine summarisch abgreifende Wägemesszelle umfassen, wie diese insbesondere tragen, was die Vorteile einer lokal-direkten, möglichst unverfälschten Messung weiter verstärkt. Im Speziellen darf eine Sensormesskomponente vorliegen, die auf, an oder in dem Bremslastmessfühler, innerhalb der Aufnahmequerbohrung gelagert, vorgesehen ist, wie insbesondere den Bremslastmessfühler als solchen ausbildet. Dabei darf der Bremslastmessfühler eine elektrische Wägezelle integrieren. Zusatzaufwand oder gesonderter Aufbau wird rationalisiert, indem der Bremslastmessfühler weiterhin als ein Deformationskörper mit definierter Elastizität und mit definierter Formgebung wie insbesondere mit definiertem Querschnitt ausgebildet ist.

Im Unterschied zu bekannten Messprinzipien bleibt erfindungsgemäß ein Aufnahmegehäusekörper (Lagerbock) des erfindungsgemäßen Lastmesswiderlagers im Wesentlichen undeformiert, wohingegen ein gesondert definierter Bremslastmessfühler vorliegt, und wobei ein Bremslastmessfühlerkörper neben einer Kolbenanschlagfunktion gleichzeitig eine Funktion als elastisch-nachgiebiges, d.h. reversibel deformierbares Elastoelement integrieren darf. Mit anderen Worten darf der Bremslastmessfühler gleichzeitig als adaptiv austauschbares Elastoelement verstanden werden, welches mit rationeller Adaption an die Bedürfnisse und Bremslastrandbedingungen der jeweiligen Kraftfahrzeugbremsanlage fluchtend in einen Kraftfluss der Bremszuspann-/Bremskräfte und/oder Bremsmomente eingefügt ist.

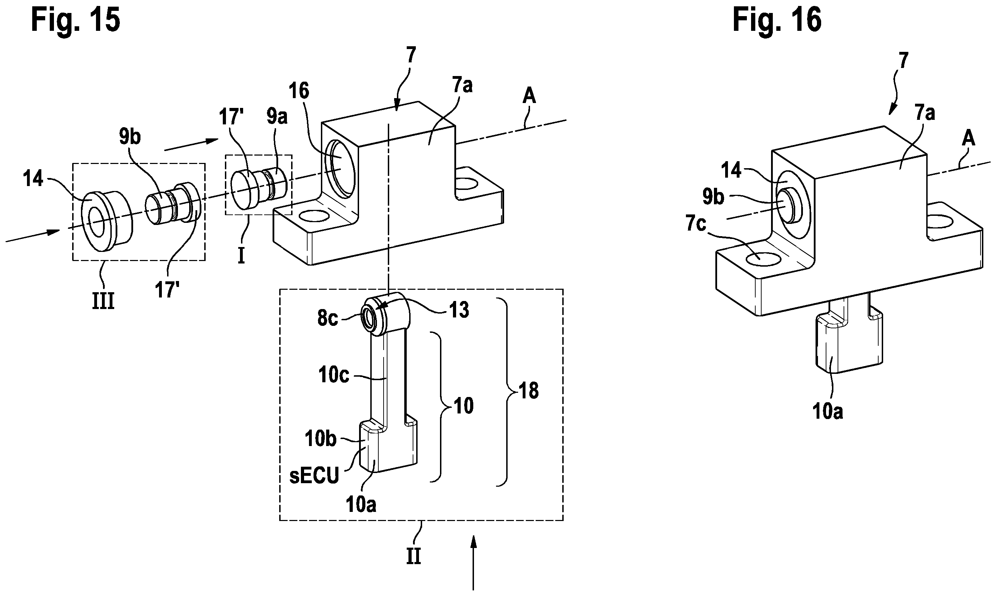

Die besagte Aufnahmequerbohrung im Gehäuse darf vorteilhafterweise als eine abgestufte Durchgangsbohrung, ohne Boden, ausgebildet sein. Durch diese offene Bauweise, ohne Boden - sowie ausgehend von einer einzigen Bezugskante - wird es bei verbesserter Toleranzsituation prinzipiell ermöglicht, dass sämtliche Werkstückorientierung, Bauteilzuführung, Kolbenmontagevorgänge, Kolbeneinführvorgänge etc. in eine Einschubmontagerichtung axial (Achse A) einheitlich gerichtet sowie ausgehend von einer einzigen Mündungsseite ermöglicht ist, was die modular-arbeitsteilige industrielle Großserienfertigung verbessert. Komponentenherstellung sowie Bauteilmontage ist vereinfacht ermöglicht, wenn die Aufnahmequerbohrung durchgehend, glatt ausgebildet ist. Bei einer besonders montageoptimierten Ausführungsform mit Kolbeneinschub von einer einzigen Stirnseite ist eine Stufenbohrung mit sich sukzessive in Vorschubrichtung der Aufnahmequerbohrungslängsachse (Pfeilrichtung) verjüngendem Durchmesserstufen derart ausgebildet, dass jeweils endseitig zueinander beabstandet allokierte Aufnahmequerbohrungsmündungen in Relation zueinander jeweils einen größten Aufnahmequerbohrungsinnendurchmesser di max und einen kleinsten Aufnahmequerbohrungsinnendurchmesser di min des Gehäuse ausbilden. Das Ergebnis ist eine im Wesentlichen hinterschneidungsfreie, durchgehende Aufnahmebohrung wie nach Fig. 15-17 mit entsprechend einseitig rationalisiertem Herstellungs- und Kontrollaufwand.

In diesbezüglich besonders vorteilhafter Weiterbildung der Konstruktion ist es möglich, dass die Aufnahmequerbohrung endseitig, jedenfalls im Bereich des größten Aufnahmequerbohrungsinnendurchmessers, mit einem Verschluss versehen ist, und wobei der Verschluss über einen Durchlass verfügt, welcher von dem jeweiligen Kolben zwecks Kraft-/bzw. Momentenübertragung durchgriffen ist. Zwecks Absicherung bzw. Vermeidung einer unerwünschten, unkontrollierten Demontage kann einem oder beiden Kolben ein Lager 17 zugeordnet sein. Dabei bietet es sich an, wenn dies Lager beispielhaft zwecks Rationalisierung zusätzlicher Bauteile bzw. Komponenten anhand von gegenseitiger Kooperation von zwingend erforderlichen Bauteilen formschlüssig ausgebildet ist. Im Einzelnen darf dies so gelöst sein, dass jeder Kolben 9a,9b zwecks Rückanschlag und/oder Lager 17' umfangsseitig mit einer Stufe oder Absatz versehen ist, die dazu geeignet und bestimmt ist, mit einem zugeordneten Gehäusegegenanschlag zu kooperieren. Und der vorstehend erwähnte Aufnahmequerbohrungsverschluss 14 darf als Doppelfunktion gleichzeitig als Lager für Kolben 9a,b fungieren, indem der Verschluss 14 einen mittelbaren oder unmittelbaren Anschlag für einen Kolben 9a,9b ausbildet.

Aus Messpräzisionsgründen wird eine exakt fluchtende sowie verdrehgesicherte Führungsaufnahme der Kolben 9a,b in der Aufnahmequerbohrung empfohlen. Eine weitere Anforderung besteht darin, dass eine möglichst koaxial exakt ausgebildete Aufnahme und Zentrierung der Bremslastmessfühlerkomponente ("Fesselung") in die unterschiedlichen Raumachsrichtungen, wie insbesondere in Relation zu den Kolben 9a,b, definiert ist. Zu diesen Zwecken dienen entsprechende Verdrehsicherungsmittel mit Kolbenangriff respektive entsprechende Ausrichtungs- und Zentriermittel die vorzugsweise beispielhaft zwischen Kolben und/oder Kolbenaufnahme (Aufnahmequerbohrung) und/oder Bremslastmessfühler definiert sind. Die Verdrehsicherung ist vorzugsweise Formschlüssig wohingegen die Ausrichtungs- und Zentriermittel formschlüssig und/oder kraftschlüssig wie insbesondere als Elastoelement mit Federeigenschaft ausgebildet sein. Insbesondere bevorzugt dürfen im Kontext der Offenbarung einer bevorzugten Ausführungsform zu diesem Zweck Elastomerelemente (O-Ringe) definiert sein.

In vorteilhafter Weiterbildung kann zwecks Vermeidung metallischer Klappergeräusche auf Schlechtwegpassagen und/oder Vermeidung von Anschlaggeräuschen infolge Lastwechselreaktionen einem Rückanschlag und/oder Lager ein Elastoelement zugeordnet sein. Dies Elastoelement ist in vorteihafter Präzisierung insbesondere beispielhaft als Federelement gebildet. In Vereinheitlichung oder Vereinfachung der Konstruktion darf dies Elastoelement und/oder Federelement als ein Elastomerkörper, wie insbesondere als ein Elastomerring ausgebildet sein, welcher am Gehäuse, und/oder am Verschluss und/oder am Kolben gelagert ist. In Perfektionierung seiner Dämpfungsfunktion darf in Weiterbildung alternativ ein Feder-Dämpfer-Element vorliegen.

Ein weiterer Aspekt der vorliegenden Erfindung beinhaltet Vorschläge zwecks Bauraumverdichtung, respektive eine verbesserte Herstellung wie insbesondere einen Nachweis über verbesserte oder wartungsfreundliche Montagekonzepte.

Weitere Einzelheiten der erfindungsgemäßen Bremslastmesseinrichtung gehen aus nachstehender Beschreibung anhand der Zeichnung hervor. In der Zeichnung zeigt:

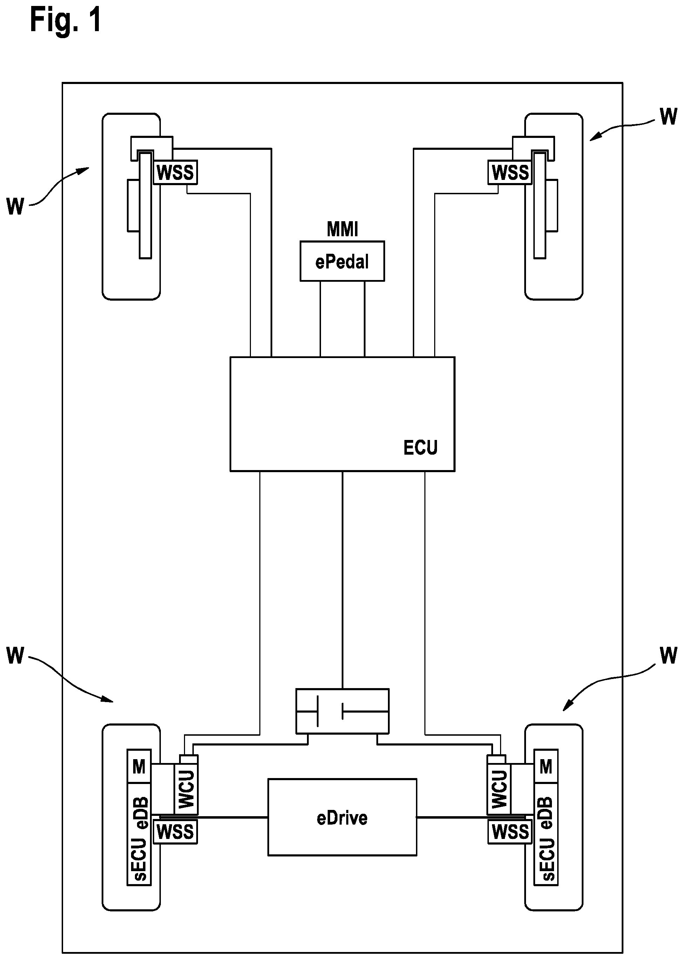

Fig. 1 schematische Architektur eines elektronischen Kraftfahrzeugbremssystems umfassend elektrische Trommelbremsen, die hier rein exemplarisch einer elektrisch angetriebenen Fahrzeughinterachse zugewiesen sind,

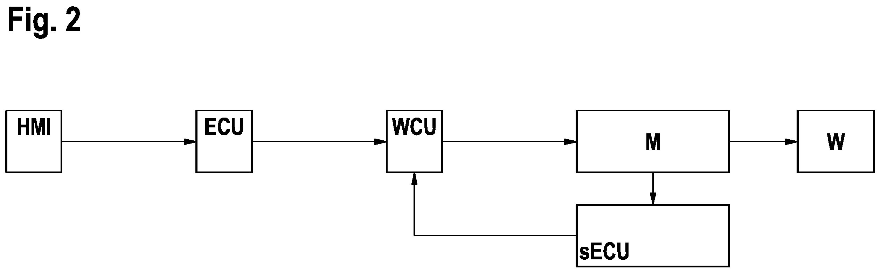

Fig. 2 stark abstrahierte Bremssystemübersicht,

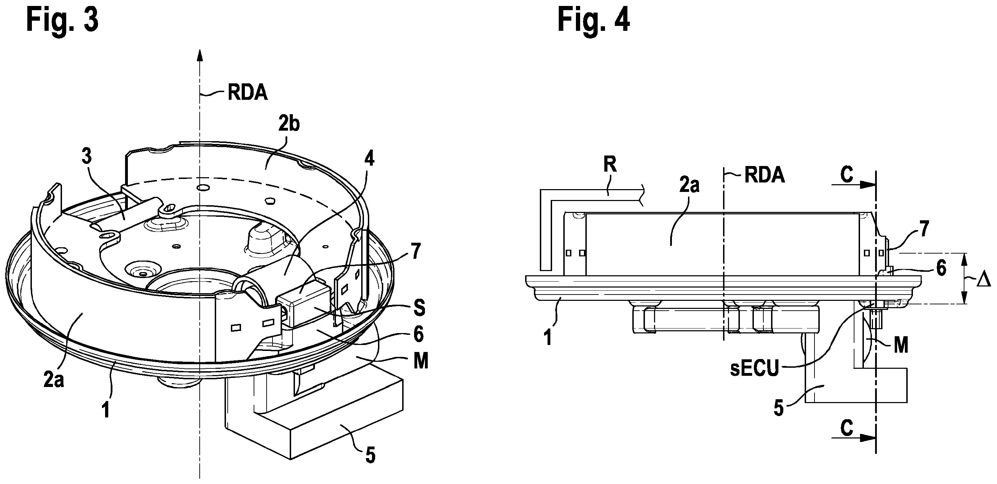

Fig. 3 verkleinert und perspektivisch eine elektromechanisch betätigte Trommelbremse vom Typ Duo-Servo ohne Rotor (Bremstrommel),
Fig. 4 die Trommelbremse aus Fig. 3 in Seitenansicht
Fig. 5 Schnittansicht mit Schnittführung C-C wie in Fig. 4 angedeutet,
Fig. 6 eine bevorzugte Bremslastsensormontagebaugruppe,
Fig. 7 - Fig. 10 Ansichten einer Bremslastmessfühlervariation mit Kreisquerschnitt
Fig. 11 - Fig. 14 Ansichten einer alternativen Bremslastmessfühlervariation mit Rechteckquerschnitt,
Fig. 15 Explosionszeichnung einer besonders bevorzugten Bremslastmessfühlervariation mit integral aufgenommener Wägezelle,
Fig. 16 wie Fig. 15 als Zusammenbauzeichnung, perspektivisch,
Fig. 17 Schnittansicht einer Variante mit integral aufgenommener Wägezelle in elektrischer Verbindung mit einer entkoppelt distanziert verlegten Sensor-ECU (sECU) zwecks Signalaufbereitung, sowie

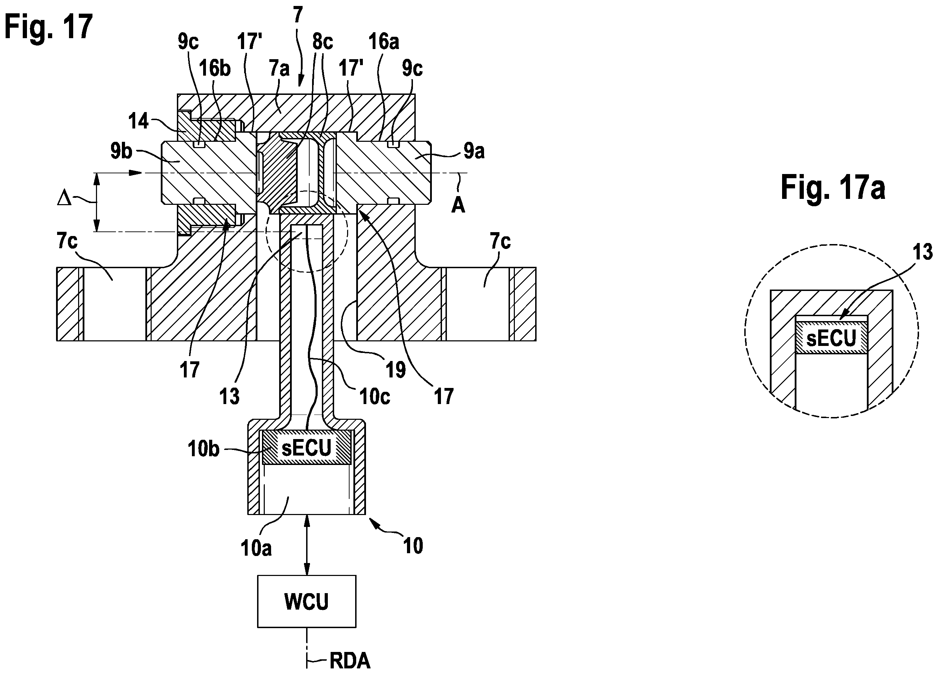

Fig. 17 a eine weitere alternativ bevorzugte Variation als vergrößerter Ausschnitt mit im Bereich der Wägezelle 13 integral platzierter Sensor-ECU sECU zwecks messstellenallokierter elektrischer Primärsignalaufbereitung,

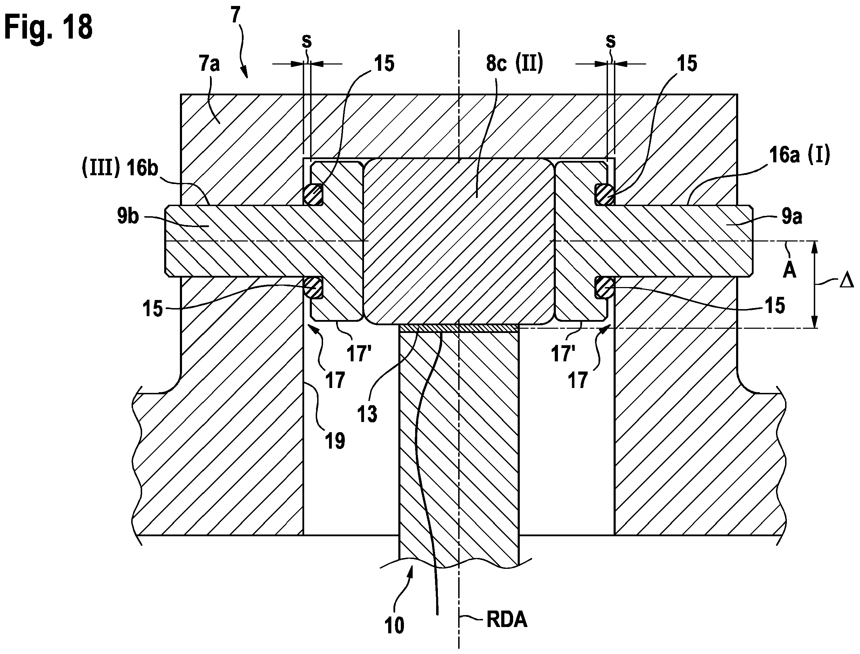

Fig. 18 eine alternative Ausführungsform mit Elastoelementen 15,

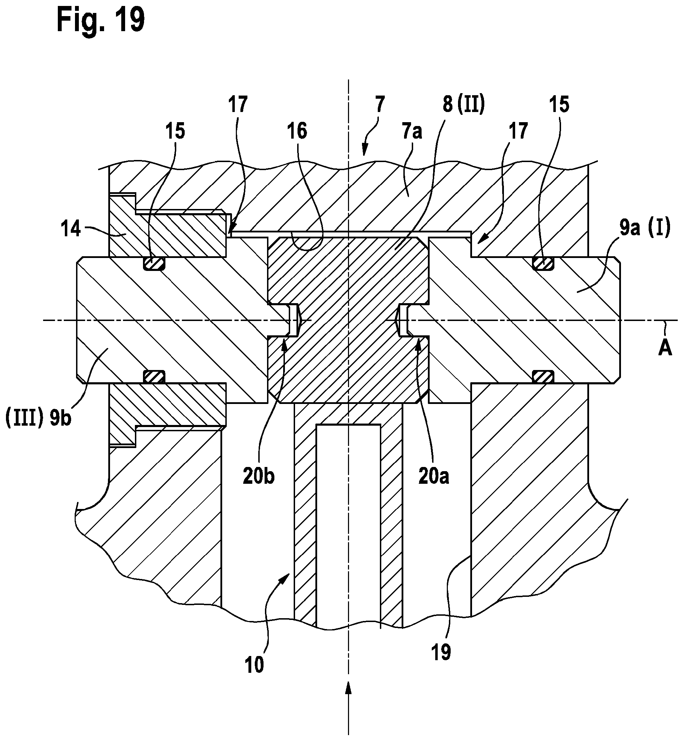

Fig. 19 alternativ verbesserte Ausführungsform vergleichbar Fig. 18 mit in Relation zu den Kolben 9a,9b koaxial fixiert zentriertem Bremslastmessfühler 8 und mit, in eine umlaufende Kolbennut eingefügte Elastoelemente 15,

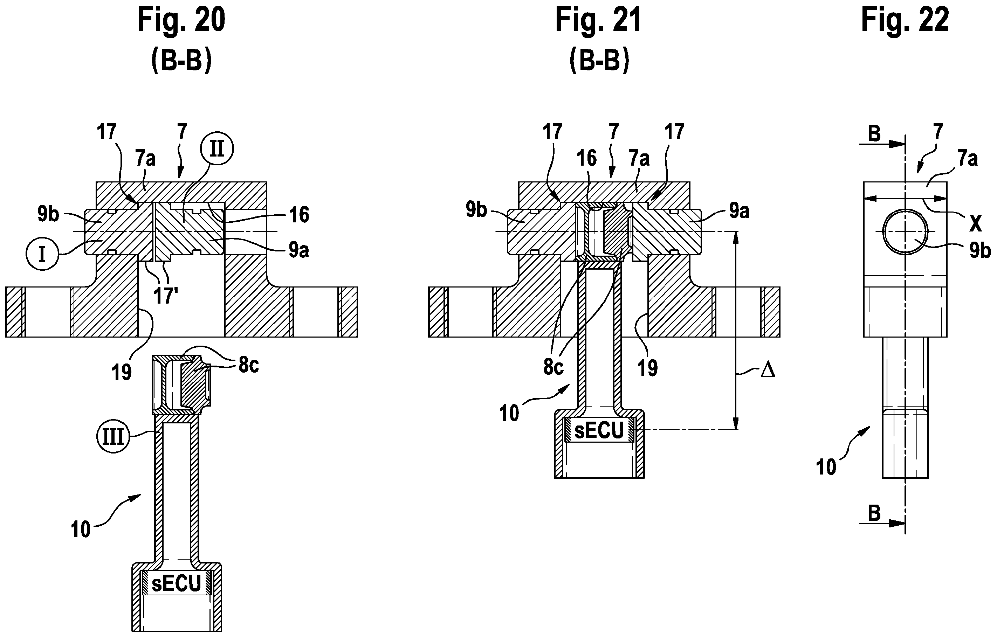

Fig. 20 - 22 eine rationalisierte und auch vorteilhaft bauraumverdichtet (vergleichsweise schmales Maß X) aufgebaute Ausführung anhand gehäuseintegralem Verschluss wobei beide Kolben 9a,9b mit Lagerabsatz 17' ausgebildet sind, und die Kolben 9a,9b nicht einseitig von lateral (Fig. 17) sondern von jeweils von zentral innen kommend in die Aufnahmequerbohrung 16 eingefügt sind, und

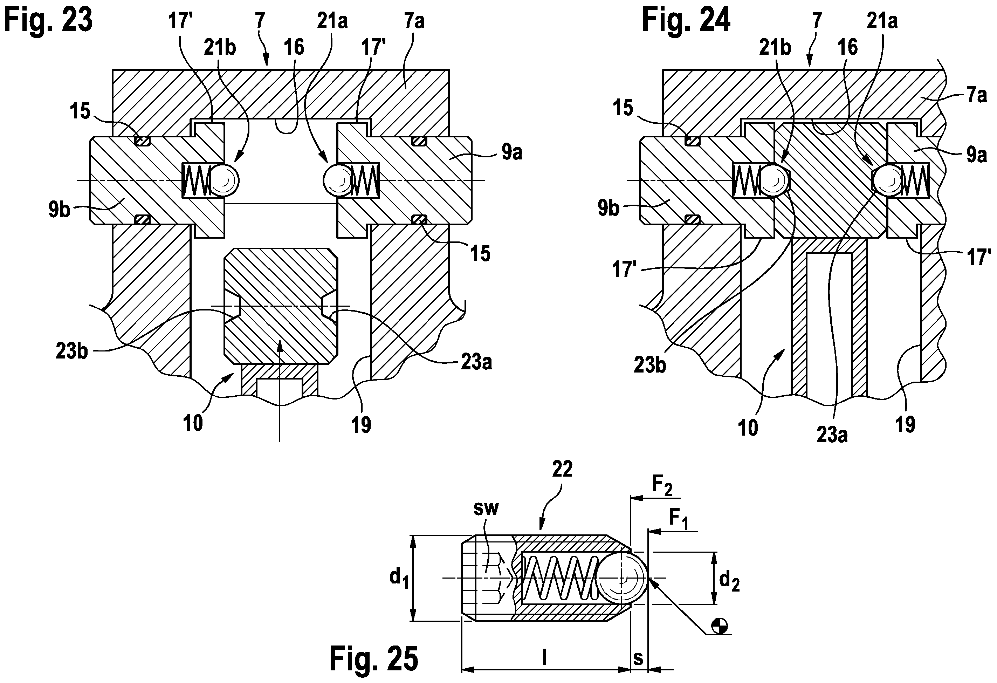

Fig. 23 - 25 schematisch eine Ausführungsform mit besonders montagefreundlich arrangierter Konstruktion umfassend Automatik-Zentriermittel 21a,b (vgl. ein bevorzugtes federndes Druckstück 22 wie in Fig. 25).

Erläutert wird eine gebaute Sensor-Einrichtung zur Messung des Radbremsmoments in einer Trommelbremse. Insbesondere ist die Bremslastmesseinrichtung für elektromechanisch betätigte Betriebsbremsen geeignet und bestimmt, in denen keine hydraulische oder pneumatische Wirkenergie/Druckmittel vorliegt, ergo keine hydraulische/pneumatische Regelbarkeit gegeben, nachgefragt oder gefordert ist. Mischformen sind jedoch auch prinzipiell denkbar also grundsätzlich möglich.

Die nachfolgende Beschreibung einer einschlägigen Bremslastmesseinrichtung erfolgt exemplarisch sowie schwerpunktmäßig am Beispiel von einer Kraftfahrzeugtrommelbremse des Duo-Servo-Typs. Als Last sollen dabei gleichermaßen je nach entsprechender Aufgabe oder Ziel einerseits das wirksame Bremsmoment wie andererseits die wirksame Bremskraft verstanden werden. Ganz grundsätzlich ist die beschriebene Lastmesssensorik weiterhin gleichermaßen sowohl für Betriebsbremsen in Duo-Servo-Ausgestaltungen als auch für Simplex-Trommelbremsen geeignet. Die Duo-Servo Bremse verfügt über eine hohe Selbstverstärkung wodurch vorteilhafterweise mit geringen Betätigungskräften hohe Bremsmomente erzeugt werden können (Kosten- und Bauraum-Reduktion des Aktuators). Eine besondere Herausforderung des Duo-Servo-Bremsentyps bezieht sich auf dessen anspruchsvoll gestaltete Regulierbarkeit. Bekannte Betriebsbremsen des Typus Duo-Servo litten unter Schiefziehen des Fahrzeugs, reduziertem Fahrkomfort und ähnlichem. Die vorliegende Erfindung ermöglicht eine praktikable Lösung der Problemstellung und Anforderungen derart, so dass die besonderen Vorteile der Duo-Servo Bremse zur Nutzung als Betriebsbremse ermöglicht sind. Eine Kombination einer erfindungsgemäßen Bremsvorrichtung mit einer elektrischen Feststelleinrichtung EPB zur Darstellung einer kombinierten elektrischen Betriebs- und Feststellbremse ist denkbar.

Insbesondere für Simplex-Trommelbremsen eignet sich die integrierte Bremslastsensorik, um die Regelbarkeit der Radbremse zu verbessern. Wie gesagt beziehen sich jedoch die folgenden Ausführungen vorwiegend auf die in der Zeichnung beispielhaft verdeutlichte Applikation anhand von einer Duo-Servo Radbremse. Bei einer Simplex-Variante verändert sich demgegenüber im Wesentlichen die Position der Sensor-Vorrichtung von unmittelbar unterhalb oder oberhalb der Spreizvorrichtung (4) zu einem festen Bremsmesswiderlager gegenüberliegend der Spreizvorrichtung (anstelle der Nachstelleinrichtung (3)).

Die Sensierung des Bremsmoments erfolgt über die Messung der von der Bremsbacke (2a, 2b) auf das Bremsmesswiderlager (7) wirkenden Abstützkraft. Bei der Duo-Servo-Bremse wirkt je nach Fahrtrichtung eine einseitige Kraft (12a), bei der Simplex Bremse wirken unterschiedlich große Abstützkräfte von beiden Seiten gleichzeitig. Zwischen der gemessenen Abstützkraft und dem Bremsmoment besteht ein weitestgehend proportionaler Zusammenhang.

Die Sensor-Vorrichtung umfasst einen Bremslastmessfühler 8, welcher in einem Gehäuse von einem Bremsmesswiderlager 7 aufgenommen ist. Die Abstützwirkung (ein resultierendes Bremsmoment beziehungsweise die Abstützkraft) der Bremsbacken wird je nach Bremsmomentenrichtung über im Gehäuse geführte Kolben 9a,9b in den Bremslastmessfühler 8 eingeleitet. Bei, an oder auf dem Bremslastmessfühler 8 befindet sich ein Sensormittel 13 in Gestalt einer Wägezelle, wie insbesondere aufweisend wenigstens ein DMS (Dehnungsmessstreifen) der eine resultierende elastische Deformation des Bremslastmessfühler (resultierende Verformung) als Maß für die Bremskraft/Bremsmoment sensiert. Der Bremslastmessfühler (Abstützelement) kann als Deformationskörper ausgelegt sein, welcher zum einen die Abstützkräfte effizient in das Gehäuse 7 einleitet und andererseits eine eindeutige Spannungserhöhung zwecks Messung anhand des Sensormittels 13/ DMS generiert. Dem Sensormittel ist eine elektrische Steuereinheit ECU zwecks Messsignalaufbereitung bzw. Messsignalverarbeitung zugeordnet.

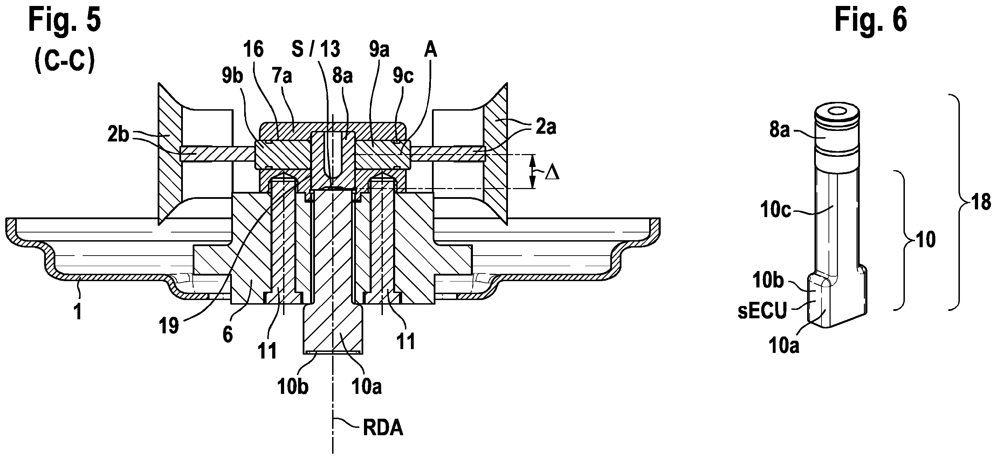

Geeignete geometrische Formgebungen des Fühlers beinhaltet prismatische Körper welche Querschnitte aufweisen, die beispielsweise bevorzugt durch geschlossene Geometrie gekennzeichnet sind wie nämlich abgerundete oder insbesondere kreisrunde Querschnittsformen vgl. 8a oder rechteckige Querschnittsformen vgl. 8b und in Verbindung mit Messzelle, Wägezelle 8c stehen. Die kreisrund definierte Querschnittsform nach 8a (vgl. Fig. 5 + 6) ist im Ergebnis zylindrisch verlängert und verfügt einerseits über einen Boden. Die Bauform hat den Vorteil, dass der Fühler weitgehend unmittelbar in eine fertigungsgerechte Aufnahmequerbohrung eingefügt werden kann. Eine Rechteck-Form nach 8b ermöglicht eine größere Kolbenauflagefläche mit entsprechend erhöhter Robustheit. Sämtliche Messfühlerverkörperungen können durch individuelle Anpassung ihrer Formgebung (z.B. einer Wandstärke bzw. der Innenkontur bei 8b) an verschiedene Lastniveaus oder Bedingungen angepasst werden, so dass je nach Fahrzeugtyp z.B. nur der Bremslastmessfühler 8 als eine Austauschkomponente ausgetauscht werden kann, um das Bremsmesswiderlager anzupassen. Dadurch ist es möglich, bei möglichst vielen Gleichteilen und mit möglichst wenigen Sonderteilen eine rationelle Baukastenvariation zur Anpassung an unterschiedliche Applikationen vornehmen zu können - Modularität. Gleiches gilt für die Variante mit Wägezelle. Hier ist zur Lagerung innerhalb des Gehäuses eine Anschlagsmutter 14 definiert. Die Anschlagsmutter hat vorteilhaft einen Bund, so dass diese bei der Montage bis auf den Bund eingeschraubt werden kann und so das gewünschte Spiel zu der Wägezelle oder die gewünschte Vorspannung auf die Wägezelle eingestellt werden kann. Alternativ ist auch ein Sprengring denkbar, der jedoch nicht so belastbar ist wie eine Einschraubmutter.

Der Bremslastmessfühler 8 kann im Gehäuse eingepresst oder mit Spiel gelagert sein. Eine Spielpassung hat den Vorteil, dass temperaturbedingte Dehnungen keine Kraft auf den Bremslastmessfühler und damit keine ungewünschten Messsignale erzeugt werden. Zur Abdichtung ist auf den Druckstücken eine O-Ring-Dichtung 9c vorgesehen, die innerhalb des Montageprozesses auch ein Herausfallen der Druckstücke aus dem Gehäuse verhindert. Alternativ oder ergänzend ist ein außenseitig angeordnetes und statisch beanspruchtes Dichtungsmittel (bspw. Faltenbalg-Dichtung) und/oder ein dynamisch beanspruchtes Dichtungsmittel (Stangendichtung) oder Dichtungsvariationen bzw. Dichtungsäquivalente davon denkbar.

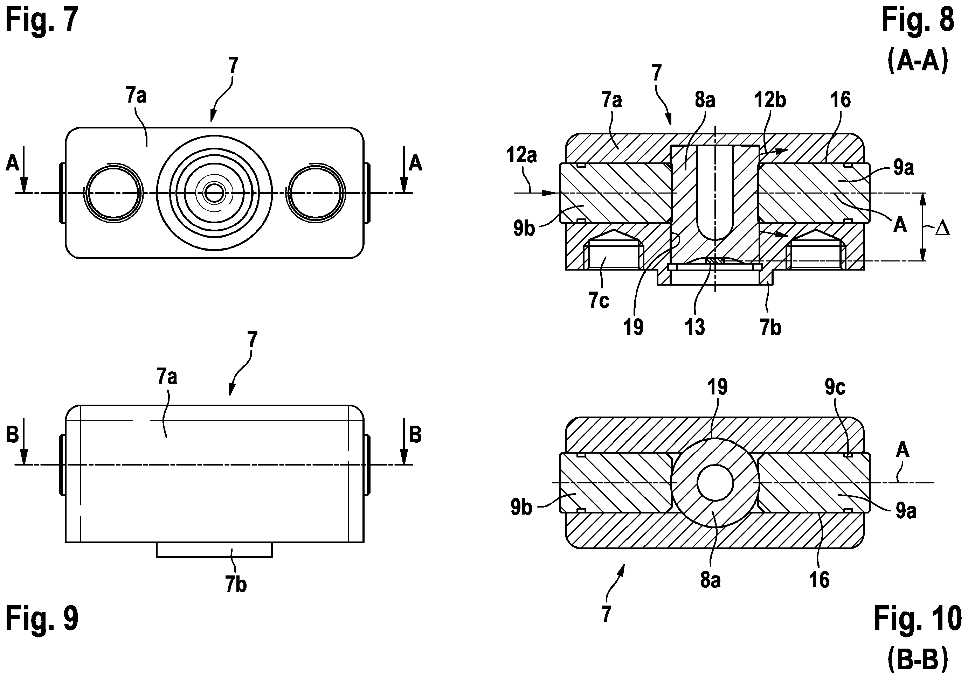

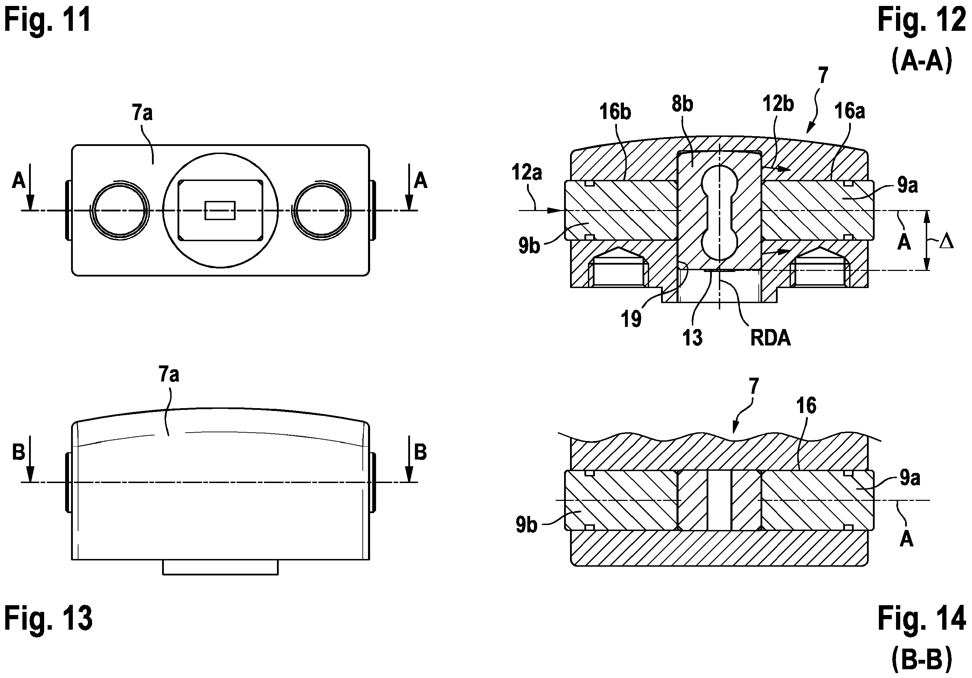

Der Bremslastmessfühler 7 (beispielsweise umfassend eine Wägezelle, DMS o.ä.) und/oder die Sensorelektronik sECU kann ganz prinzipiell integral im Gehäuse des Bremsmesswiderlagers 7 fluchtend zwischen den Bremsbacken 2a,2b aufgenommen angeordnet sein. Das Bremsmesswiderlager 7 befindet sich demzufolge seinerseits in einem Trommelbremsinnenraum, welcher im bestimmungsgemäßen Betriebsgebrauch von einem Bremsrotor, nämlich durch die nicht gezeichnete Bremstrommel, übergriffen ist. Mit anderen Worten ist durch die Kapselungswirkung der Bremstrommel eine erforderliche Abkühlung erschwert. Bei Bremsbetrieb kann ein Hitzestau vorliegen, wenn sich der Innenraum einer Trommelbremse bspw. infolge Dauerbremsung stark aufheizt, was empfindliche Sensorelektronik beschädigen könnte. Um diesbezüglich Abhilfe zu schaffen, kann wie beispielhaft laut gezeichneter Ausführungsform in Fig. 5, 8 und 12 ein eingefügtes Versatz- + Übertragungsmittel anhand der Bremslastmessfühlerkomponenten (8a) und (8b) vorliegen. Dies wirkt als Entkopplung, die es ermöglicht, einen elektrisch-sensorischen Teil 13/ sECU des Bremslastmessfühlers 8 in Relation zur Achse A distanziert zu versetzen, nämlich insbesondere in axial in Richtung des "kühlen" Außenbereich der Trommelbremse zu versetzen (d.h. Verlegung aus einem Bremstrommel-übergriffenen Innenbereich heraus sowie rückwärtig nach axial außen versetzt - nämlich rückseitig, hinter die Bremsankerplatte/Stator 1). Um eine manchmal sehr temperaturempfindlich gestaltete Messelektronik noch weiter nach außen in den thermisch günstig belegenen Außenbereich zu verlegen, kann dieser über ein mit dem Bremslastmessfühler verbundenes Gehäuse (10) nach außen verlagert sein (10b). Das Gehäuse kann fertigungsgünstig z.B. an den Bremslastmessfühler angespritzt oder angeclipst sein, eine integrierte elektrische Verbindung zwischen DMS und Elektronik aufweisen (10c) (z. B. Stanzgitter, Leiterbahn, Kabel) und unmittelbar einen Stecker/Buchse (10a) zur Verbindung mit der WCU (Wheel Control Unit) aufweisen (alternativ ist auch eine steckerlose Verbindung zur WCU denkbar). Diese Ausführung ermöglicht eine seriengeeignete Montage, in der der Bremslastsensorik zusammen mit der Auswerte-Elektronik und dem Stecker als eine vormontierte Baugruppe (18) "von unten" in die Bremsen-Baugruppe eingesteckt werden kann.

Der Sensor-Aufbau eignet sich vorteilhaft auch zur Reduzierung der "Klack-Geräusche" (Geräusche, die beim schlagartigen Umschlagen der Bremsbacken von einer Abstützseite auf die andere Seite entstehen). Hierzu empfiehlt es sich zumindest ein Dämpfungselement - vgl. Elastoelement 15 in diversen Ausgestaltungsmöglichkeiten - vorzugsweise im Kraftfluss - zwischen den kraftbeaufschlagten Kolben und das Gehäuse (7) einzufügen. Das Dämpfungselement (z.B. Elastoelement, Elastomerring, 15) kann beispielsweise im Kraftfluss zwischen Kolben 9a,9b und Gehäuse liegen (wie in Fig. 19,19 dargestellt) oder zwischen Kolben 9a,9b und dem Bremslastmessfühler 8a,b,c eingefügt sein. In weiterer Ausgestaltung denkbar ist eine Dämpfung zwischen Kolben 9a,b und Bremsbacke 2a,b.

Eine vorteilhafte Ausführung besteht darin, den Bremslastmessfühler - insbesondere in Verkörperung mit Wägezelle 13 - innerhalb des Gehäuses vorgespannt zu lagern. Hierzu eigen sich prinzipiell insbesondere beispielhaft sämtliche Elastoelemente wie insbesondere bevorzugt Teller-, Wellen- und/oder Elastomerfedermittel, die zwischen Kolben 9a,9b und Gehäuse positioniert sind. Eine definierte Vorspannung vom genannten Elastoelement ist geeignet, zum einen eine definierte Vorspannung einer Wägezelle (Vorspannungsoffset => filterartige Wirkung => erhöhte Messgenauigkeit) und zum anderen eine spielfreie Einbaulage einer Messzelle (Ausschluss von Anregung bzw. Ausschluss von parasitärer Messzellenbewegung infolge Vibration). Toleranzen und Temperatur-bedingte Längenänderungen können durch Dämpfung bzw. Befederung ausgeglichen werden, ohne dass es zu einer Überlast oder starken Störsignalen des Bremslastmessfühlers kommt.

Als Alternative für formschlüssig vorgetragene Zentriermittel 20a,b mit Nocken und Kavität an den Komponenten Kolben 9a,b und Bremslastmessfühler 8a,b,c wie nach dem Offenbarungsgehalt der bevorzugten Ausführungsform gemäß Fig. 19, ist es gemäß abgewandelter Ausführungen nach dem Vorbild der Fig. 23 - 25 möglich, Automatik-Zentriermittel 21a,b vorzusehen, so dass Montagevorteile erzielbar sind. Jedes Automatik-Zentriermittel 21a,b kann demzufolge als ein gesondertes Maschinenelement (federndes Druckstück) vorliegen, welches an einer der Komponenten einstellbar fixierbar ist, und dazu über einen eigenen Körper mit einem federvorgespannten Druckkörper - wie insbesondere über eine federvorgespannte Kugel als Druckkopf - verfügt, und wobei der Druckkörper dazu geeignet und bestimmt ist, federnd vorgespannt in eine zugeordnete Kavität 23a,b an der zugeordneten (der zu zentrierenden) Komponente einzugreifen, so dass sich mit Interaktion nach Komponentenzusammenbau automatisch ein lösbares form- und kraftschlüssig-vorgespanntes Arrangement ergibt. Mit Vorteil verfügt die Kavität dazu beispielhaft über eine konifizierte, kugel-kalottenförmige oder anderweitig geometrisch profilierte Formausgestaltung zur Interaktion mit dem Druckkörper, damit die erwähnte automatische Zentriereigenschaft unterstützt ist. Jeder der Kolben 9a,b kann wie gezeichnet über ein eigenes federndes Druckstück verfügen, um durch Interaktion mit der in Montagerichtung zugeführten Bremsmesskomponente eine selbstjustierende sowie automatische Einschnapp-Zentrierung zu ermöglichen.

Es ist hinzuzufügen, dass sich prinzipiell zur Anordnung zwischen Aufnahmegehäuse des Bremsmesswiderlagers 7, Kolben 9a,b und Bremslastmessfühler 8a,b,c beziehungsweise dessen Komponenten Zentriermittel 20a,b wie beispielhaft nach dem Vorbild der Ausführung gemäß Fig. 19 empfehlen. Zwecks Ermöglichung einer möglichst präzisen sowie koaxial zur Achse A konzentrisch ausgerichteten Anordnung kann dafür beispielsweise ein gegenseitig abgestuftes Formschlussarrangement so sein, dass an wenigstens einer der gepaarten Komponenten wenigstens ein koaxial vorgesehener sowie überstehender Zapfen vorliegt, welche zum Eingriff in eine zugeordnete Vertiefung an einer Gegenkomponente geeignet und bestimmt ist. Insbesondere beispielhaft kann nach Fig. 19 jeder Kolben 9a,b mit einem mittigen Zentrierzapfen versehen sein, der in eine mittige Zentrierausnehmung des Bremslastmessfühlers 8 eingreift. Prinzipiell kann die Anordnung kann auch umgekehrt vertauscht arrangiert sein, oder alternativ ist eine Mischform ausbildbar, indem beispielsweise ein Kolben 9a mit einer Zentrierausnehmung zur Aufnahme eines Zentrierzapfens dient, der vom Bremslastmessfühler ausgeht, und wobei andererseits der Bremslastmessfühler auf seiner linken Seite über eine Zentrierausnehmung verfügen darf, in die ein Zentrierzapfen des Kolbens 9b eingreifen kann.

Weiterhin abgewandelte Ausgestaltungen der Zentriermittel sind möglich. Beispielsweise und alternativ zu Zentrierzapfen kann ein oder ggf. beide der Kolben 9a,b mit einem federnden Druckstück wie nach der Fig. 23 versehen sein, so dass mit dem Einschub des besagten Bremslastmessfühlers 8 zwischen die beiden Kolben 9a,b automatisch eine passende Zentrierposition sowie lagesichere Einspannung zwischen den Kolben 9a,b dargestellt ist.

Für erhöhte Messpräzision empfiehlt sich eine verdrehgesicherte Aufnahme der Kolben 9a,b im Bremsmesswiderlager 7. Dadurch wird unerwünschte Rotation der Kolben 9a,b vermieden. Eine unerwünschte Kolbenrotation könnte hervorgerufen werden, wenn beispielsweise ein geringfügig deplatzierter wie insbesondere außermittig versetzter Kontakt bzw. Kraftangriff/Auflage am Kolben 9a,b vorliegt. Besonders günstig in Bezug auf Fertigung und Montage kann eine formschlüssige Verdrehsicherung zwischen dem Verschlusselement 14 und dem hier hindurchgreifenden Kolben 9b hergestellt werden. Hierzu greift beispielsweise ein an die Innenseite des Verschlusselements 14 (in Richtung Wägezelle 13 weisender, angeformter Formschluss ("Nase") in eine entsprechende Aussparung an einem Kolbenbund ein und sichert somit die Verdrehung des Kolbens 9b gegenüber dem Verschlusselement 14. Das Verschlusselement 14 ist bevorzugt über ein Gewinde reibschlüssig fest mit dem Aufnahmegehäuse des Bremsmesswiderlagers 7 verbunden. Alternativ ist auch eine formschlüssige Verdrehsicherung unmittelbar zwischen Kolben 9a,b und Gehäuse möglich, insbesondere beispielhaft für den Kolben 9a.

Wie vorbildlich anhand Fig. 19 erkennbar, ist eine erzielbare Messpräzision erhöht, indem eine möglichst exakte Ausrichtung des Bremslastmessfühlers 8 anhand Zentriermittel zwischen den Kolben 9a,b definiert ist. Als Alternative für die formschlüssig vorgetragenen Zentriermittel 20a,b mit Nocken und Kavität an den Komponenten Kolben 9a,b und Bremslastmessfühler 8a,b,c wie nach dem Offenbarungsgehalt der bevorzugten Ausführungsform gemäß Fig. 19, ist es gemäß abgewandelter Ausführungen nach dem Vorbild der Fig. 23 - 25 möglich, Automatik-Zentriermittel 21a,b vorzusehen, so dass Montagevorteile erzielbar sind. Jedes Automatik-Zentriermittel 21a,b kann demzufolge als ein gesondertes Maschinenelement (federndes Druckstück) vorliegen, welches an einer der Komponenten einstellbar fixierbar ist, und dazu über einen eigenen Körper mit einem federvorgespannten Druckkörper - wie insbesondere über eine federvorgespannte Kugel als Druckkopf - verfügt, und wobei der Druckkörper dazu geeignet und bestimmt ist, federnd vorgespannt in eine zugeordnete Kavität 23a,b an der zugeordneten (der zu zentrierenden) Komponente einzugreifen, so dass sich mit Interaktion nach Komponentenzusammenbau automatisch ein lösbares form- und kraftschlüssig-vorgespanntes Arrangement ergibt. Mit Vorteil verfügt die Kavität dazu beispielhaft über eine konifizierte, kugel-kalottenförmige oder anderweitig geometrisch profilierte Formausgestaltung zur Interaktion mit dem Druckkörper, damit die erwähnte automatische Zentriereigenschaft unterstützt ist. Jeder der Kolben 9a,b kann wie gezeichnet über ein eigenes federndes Druckstück verfügen, um durch Interaktion mit der in Montagerichtung zugeführten Bremsmesskomponente eine selbstjustierende sowie automatische Einschnapp-Zentrierung zu ermöglichen.

Weiterhin ist hinzuzusetzen, dass der vorgeschlagene Bremslastmessfühler 8a,b,c, oder Komponenten davon, in Relation zu einer fluchtend zwischen den Bremsbacken 2a,2b gegeben definierten Achse A mit Distanzierung Δ derart im Gehäuse des Bremsmesswiderlager 7 axial rückversetzt platzierbar vorgesehen sein kann, dass dem Bremslastmessfühler 8a,b,c, oder zumindest dessen sensiblen Komponenten wie insbesondere einer Wägezelle 13 und/oder Elektronik sECU, (thermischer) Bauteilschutz durch Isolierung, Luftspalt o.ä. zukommt.

Die Figuren 20 - 22 verdeutlichen darüber hinaus einen besonders verdichteten und auch rationalisierten Aufbau eines besonders bevorzugten Bremsmesswiderlagers 7 bei besonders fortschrittlicher Produktionstechnologie. Grundsätzlich herrscht eine Kritikalität der Baugröße und ein genereller Miniaturisierungszwang für alle Einbaukomponenten. Ganz besonders kritisch ist dabei eine Gehäusebreite X des Bremsmesswiderlagers 7, so dass die Nebenaufgabe besteht, das Maß X zu minimieren. Dazu leistet die vorliegende Erfindung einen Beitrag und ermöglicht weiterhin auch unterschiedlich variierte Verfahren zwecks Komponentenmontage.

Einerseits ist eine besonders effizient gestaltete industrielle Baugruppen-/Komponentenmontage ermöglicht, die besonders prozesssicher automatisierbar und überwachbar ist, indem die Einbaukomponentenzufuhr ausschließlich von einer einzigen Seite ausgeht (ausgehend von unten und durch die Aufnahmelängsbohrung hindurch) erfolgt. "Unten" ist dabei sinngemäß zu verstehen, und bezieht sich dabei lediglich auf die beispielhafte zeichnerische Darstellung, und wobei dies in Realität und in Abhängigkeit vom Aufbau der jeweiligen maschinellen Produktionsanlage auch anderweitig gedreht vorliegen darf.

Ein weitgehend ersatz- und/oder wartungsfreundlich dargestelltes Komponentenmontagekonzept geht beispielhaft aus der Fig. 15 hervor. Die Explosionszeichnung nach Fig. 15 lässt die Stadienfolge I, II und III erkennen, und wobei im Unterschied zu einer anderen, alternativen, Bauweise zweiseitig (in der Figur 15 von links und von unten) angegriffen wird und wobei die Einbaukomponenten separat von den beiden unterschiedlichen Seiten zugeführt und montiert werden. Die vergleichsweise austauschfreundlich und dadurch ressourcenschonend arrangierte Konstruktion sowie Montageverfahren lassen es beispielhaft einfach zu, defekte Bremslastmessfühler/Wägezellen auszuwechseln, ohne dafür Kolben 9a,b ausbauen zu müssen.

Eine alternativ weiterentwickelte Konstruktion + Montageverfahren basiert demgegenüber auf einer einseitig angreifenden Komponentenzufuhr gemäß der bevorzugten Vorgehensweise wie nach dem Beispiel von Fig. 20 - 22. Dies Bauteilhandling erfolgt dabei ausschließlich einseitig sowie von "unten" (Lageangabe ist sinngemäß zu interpretieren + insbesondere abhängig vom Aufbau der jeweilig gewählten industriellen Produktionsstraße) durch die "unten" einseitig offene Aufnahmelängsbohrung 19 hindurch. Dabei wird anhand einer symbolisierten Montagereihenfolge anhand der Stadienfolge I, II und III beginnend im Schritt I zuerst der Kolben 9b durch die "unten" offene Aufnahmelängsbohrung 19 hindurch zugeführt und in die Aufnahmequerbohrung 16 eingeschoben. Mit Schritt II erfolgt der entsprechende Prozess ebenfalls "von unten" spiegelbildlich für den Kolben 9a. Mit Schritt III wird abschließend eine Bremslastmessfühlerbaugruppe 8 in ihren bestimmungsgemäßen Einbauraum "ausgehend von unten" durch die Aufnahmelängsbohrung 19 in die Flucht der Aufnahmequerbohrung 16 zwischen die beiden Kolben 9a,9b eingefügt. Im Ergebnis kann dadurch ein Aufnahmegehäuse schmaler gebaut werden (Maß X ist minimiert) oder bei gleicher Gehäusegröße wird es ermöglicht, eine preisgünstigere Sensorik/Wägezelle mit größerem Bauraumbedarf (bspw. größerem Außendurchmesser) einzusetzen.

Die wesentlichen technischen Vorteile der Erfindung sind beispielhaft wie folgt zusammenzufassen:
- durch zentrale, mittig fluchtende Einspannung/Anordnung zwischen Bremsbacken ist nur eine Wägezelle 13 zwecks Erfassung der resultierenden Bremskraft/wirksames Bremsmoment je Radbremse erforderlich (Rationalisierung)
- verdichtete, kompakte Bauweise (Miniaturisierung) - vgl. insbes. Anhand Ausführung nach Fig. 20 -22
- zur Erfassung besonders hoher Zuspannkräfte/Bremsmomente geeignet (Robust)
- reduzierte Teileanzahl bei simplifiziertem Aufbau (simpel)
- unter Ausbildung einer Spielpassung zwischen Gehäuse und Bremslastmessfühler 8 sind temperaturbedingte Dehnungen von der Wäge(Kraftmess-)zelle 13 entkoppelt (reduzierte Störeinflüsse)
- einfache baugruppenartige (Vor-)Montage sowie (Vor-) Prüfung einer Brems-Sensor-Baugruppe ermöglicht
- Bremslastmesssensorik kann mit hochtemperaturtoleranter Elektronik (sECU) gehäuseintegral aufgenommen sein - es ist gleichermaßen alternativ angeboten ECU + sECU distanziert mit Versatz Δ in einen "kühlen" Außenbereich verlagert darzustellen (Wärmeisolation und Wärmeentkoppelter Aufbau möglich)
- mittels unterschiedlich ausbildbarer Bremslastmessfühler (charakteristisches Schlüsselbauteil) bei sonst identischem Aufbau ist eine einfache Skalierbarkeit für verschiedene Fahrzeugapplikationen, Lastniveaus, Fahrzeuge etc. (rationell variierbares Design/kostensensibles Baukastensystem ermöglicht)
- symmetrische Krafteinleitung in den Bremslastmessfühler ist individuell über gleichartige sowie frei axial gleitgeführte Kolben gewährleistet - dadurch eine axiale, "saubere" querkraftkompensierte Krafteinleitung sowie Messung selbst bei leicht schräg oder versetzt aufsitzenden Bremsschuhen (robustes Messprinzip)
- günstiger Schnittstellenaufbau - definierte Schnittstelle für eine direkte, unterbrechungsfreie weitgehend einstückig durchgeschleifte elektrische Verbindung - nach Wunsch bis hin zu einer Radbremssteuereinheit WCU oder zu einem zentralen Bremsensteuergerät ESP-ECU - gute elektrische Kontaktierung/reduzierte Gefahr von Micro-Fretting

### Bezugszeichenliste

- 1: Rückenplatte, Ankerplatte, Schmutzblech (Stator)
- 2a: Bremsbacke
- 2b: Bremsbacke
- 3: Nachstelleinrichtung (bei Simplex-Trommelbremse = Position des Bremsmesswiderlagers
- 4: Spreizeinrichtung
- 5: WCU (Wheel-Control-Unit / für elektromechanische Betriebsbremse)
- 6: Bremshalter (Verbindung zwischen Achsschenkel und Bremsmesswiderlager)
- 7a: Bremsmesswiderlager mit integrierter Bremslastsensorik S
- 7b: Bund zur formschlüssigen Verbindung mit Bremshalter (verhindert Verrutschen:
- 7c: Gewinde zur Verschraubung mit Bremshalter (Schraube 11)
- 8a: Bremslastmessfühler (Variante mit rundem Querschnitt)
- 8b: Bremslastmessfühler (Variante mit rechteckigem Querschnitt)
- 8c: Bremslastmessfühler in Form einer Wägezelle
- 9a: Kolben
- 9b: Kolben
- 9c: Dichtringnut für O-Ring (O-Ring nicht dargestellt)
- 10: In Spritzguss-Gehäuse integrierter Stecker, Messelektronik und Leiterbahn zu Bremslastsensorik)
- 10a: Stecker
- 10b: Messelektronik
- 10c: Elektrische Verbindung zwischen DMS und Elektronik (z.B. Stanzgitter, Kabel, Leiterbahn)
- 11: Verschraubung (Bremsmesswiderlager zu Bremshalter)
- 12a: Abstützkraft (Bremsbacke auf Kolben)
- 12b: Kraftfluss
- 13: Bremslastsensorbaugruppe (Wägezelle vorzugsweise Dehnmessstreifen (DMS))
- 14: Verschluss (Anschlag und Führung für Kolben 9b)
- 15: Elastoelement, Dämpfungselement (z.B. O-Ring) und/oder Federelement (z.B. Tellerfeder)
- 16: Aufnahmequerbohrung
- 17,17': Lager

- 18: Montage-Baugruppe (Bremslastsensorik mit Elektronik und Stecker in Spritzguss-Gehäuse)
- 19: Aufnahmelängsbohrung
- 20 a, b: Zentriermittel
- 21 a,b: Automatik-Zentriermittel
- 22: Feder-Zentrierkomponente (Maschinenelement)
- 23 a,b: Kavität

- I, II, III: Bauteil-Montagereihenfolge
- A: Achse

- R: Bremsrotor (Bremstrommel)

- W: Wheel = Rad

- RDA: Raddrehachse

- HMI/MMI/ePedal: Mensch-Maschine-Schnittstelle

- ECU: Electric Control Unit = elektronische Steuereinheit

- sECU: Sensorelektronik

- M: elektrischer Aktuator
- WCU: Wheel Control Unit = elektronische Rad-Steuereinheit

- WSS: Raddreh(zahl)sensor

- eDB: elektrische Trommelbremse (Betriebsbremse und ggf. Feststellbremse) mit Bremslastsensorik S und elektrischem Aktuator M

- eDrive: (hybrid) elektrischer Antriebsstrang

- s: Federweg

- X: Dicke des Bremslastmesswiderlager 7

- Δ: Distanzierung (Versatz)

## Patentansprüche

1. Bremslastmesseinrichtung für eine Kraftfahrzeugbremse aufweisend eine elektrische Bremslastsensorbaugruppe, insbesondere Bremsmesswiderlager (7a,b,c) umfassend ein Aufnahmegehäuse, das drehfest sowie fluchtend zwischen zwei bremsbetätigbaren Bremsbacken (2a,b) arrangiert ist, und als Lager für die zueinander diametral gegenüberliegend beabstandet arrangierten Bremsbacken (2a,b) dient, indem das Gehäuse über eine fluchtend zu lateralen Bremsbackenauflagern arrangierte, durchgehende Aufnahmequerbohrung (16) verfügt, wobei in der Aufnahmequerbohrung zwei koaxial relativ bewegbar beabstandet aufgenommene Kolben (9a,b) geführt sind, auf denen je einer der Bremsbacken (2a,b) aufsitzt, sowie umfassend Bremslastsensorik einschließlich Bremslastmessfühler (8a,b,c) mit Lastabgriff über die Kolben (9a,b), **dadurch gekennzeichnet, dass** der Bremslastmessfühler (8a,b,c) als ein integraler Kolbenanschlag zentral sowie fluchtend zwischen die Kolben (9a,b) relativverschiebbar in die Aufnahmequerbohrung (16) derart eingefügt ist, so dass die Kolben (9a,b) in Fluchtung zueinander versatzfrei und diametral gegenüberliegend auf dem Bremslastmessfühler (8a,b,c) aufsitzen.

2. Bremslastmesseinrichtung nach Anspruch 1, **dadurch gekennzeichnet, dass** wenigstens in einem gelösten Bremszustand die Bremsbacken (2a,b), insbesondere mittelbar über die Kolben (9a,b), den Bremslastmessfühler (8a,b,c) zwischen einander mit elastischer Vorspannkraft einspannen.

3. Bremslastmesseinrichtung für eine Kraftfahrzeugbremse nach Anspruch 1 oder 2, **dadurch gekennzeichnet, dass** der Bremslastmessfühler (8a,b,c) eine elektrische Bremslastsensorbaugruppe (13), wie insbesondere eine Wägezelle (13) umfasst.

4. Bremslastmesseinrichtung für eine Kraftfahrzeugbremse nach einem oder mehreren der vorhergehenden Ansprüche, **dadurch gekennzeichnet, dass** der Bremslastmessfühler (8a,b,c) über einen elastischen Federkörper verfügt.

5. Bremslastmesseinrichtung für eine Kraftfahrzeugbremse nach einem oder mehreren der vorhergehenden Ansprüche, **dadurch gekennzeichnet, dass** der Bremslastmessfühler (8a,b,c) als Kolbenanschlag in das Zentrum der Aufnahmequerbohrung (16) eingefügt ist.

6. Bremslastmesseinrichtung für eine Kraftfahrzeugbremse nach einem oder mehreren der vorhergehenden Ansprüche, **dadurch gekennzeichnet, dass** der der Bremslastmessfühler (8a,b,c) in einer Aufnahmelängsbohrung (19) des Gehäuse gelagert ist.

7. Bremslastmesseinrichtung für eine Kraftfahrzeugbremse nach einem oder mehreren der vorhergehenden Ansprüche, **dadurch gekennzeichnet, dass** die Bremslastsensorbaugruppe (13) auf, an oder in dem Bremslastmessfühler (8a,b,c), innerhalb der Aufnahmequerbohrung (16) gelagert, vorgesehen ist.

8. Bremslastmesseinrichtung für eine Kraftfahrzeugbremse nach einem oder mehreren der vorhergehenden Ansprüche, **dadurch gekennzeichnet, dass** der Bremslastmessfühler (8a,b,c) die elektrische Bremslastsensorbaugruppe (13) integriert.

9. Bremslastmesseinrichtung für eine Kraftfahrzeugbremse nach einem oder mehreren der vorhergehenden Ansprüche, **dadurch gekennzeichnet, dass** der Bremslastmessfühler (8a,b,c) als ein Deformationskörper mit definierter Elastizität und mit definierter Formgebung wie insbesondere mit definiertem Querschnitt ausgebildet ist.

10. Bremslastmesseinrichtung für eine Kraftfahrzeugbremse nach einem oder mehreren der vorhergehenden Ansprüche, **dadurch gekennzeichnet, dass** der Bremslastmessfühler (8a,b,c) mehrstückig aufgebaut ist.

11. Bremslastmesseinrichtung für eine Kraftfahrzeugbremse nach einem oder mehreren der vorhergehenden Ansprüche, **dadurch gekennzeichnet, dass** die Aufnahmequerbohrung (16) des Gehäuses als eine abgestufte Durchgangsbohrung ohne Boden ausgebildet ist.

12. Bremslastmesseinrichtung für eine Kraftfahrzeugbremse nach einem oder mehreren der vorhergehenden Ansprüche, **dadurch gekennzeichnet, dass** die Aufnahmequerbohrung (16) als eine Stufenbohrung mit sich sukzessive in Vorschubrichtung ihrer Längsachse (A) verjüngenden Durchmesserstufen derart ausgebildet ist, dass jeweils endseitig zueinander beabstandet allokierte Aufnahmequerbohrungsmündungen in Relation zueinander jeweils einen größten Aufnahmequerbohrungsinnendurchmesser di max und einen kleinsten Aufnahmequerbohrungsinnendurchmesser di min des Gehäuse ausbilden.

13. Bremslastmesseinrichtung für eine Kraftfahrzeugbremse nach einem oder mehreren der vorhergehenden Ansprüche, **dadurch gekennzeichnet, dass** die Aufnahmequerbohrung (16) endseitig im Bereich des größten Aufnahmequerbohrungsinnendurchmessers mit einem Verschluss (14) versehen ist, und wobei der Verschluss (14) über einen Durchlass verfügt, welcher von einem Kolben (9a,b) durchgriffen ist.

14. Bremslastmesseinrichtung für eine Kraftfahrzeugbremse nach einem oder mehreren der vorhergehenden Ansprüche, **dadurch gekennzeichnet, dass** einem oder beiden Kolben (9a,b) ein Lager (17), zwecks Demontagesicherung im Gehäuse, zugeordnet ist.

15. Bremslastmesseinrichtung für eine Kraftfahrzeugbremse nach einem oder mehreren der vorhergehenden Ansprüche, **dadurch gekennzeichnet, dass** ein Lager (17) formschlüssig ist und einen Anschlag an Kolben (9a,b) und/oder einen Anschlag an Gehäuse einschließt.

16. Bremslastmesseinrichtung für eine Kraftfahrzeugbremse nach einem oder mehreren der vorhergehenden Ansprüche, **dadurch gekennzeichnet, dass** ein Lager (17) kolbenumfangsseitig vorliegt wie insbesondere als ein Vorsprung, Stufe oder Absatz ausgebildet ist, welcher dazu geeignet und bestimmt ist, formschlüssig mit einem zugeordneten Widerlager zu kooperieren.

17. Bremslastmesseinrichtung für eine Kraftfahrzeugbremse nach einem oder mehreren der vorhergehenden Ansprüche, **dadurch gekennzeichnet, dass** ein Lager (17) eine gesondert am Kolben (9a,b) montierbare Komponente, wie insbesondere beispielhaft einen Sprengring umfasst.

18. Bremslastmesseinrichtung für eine Kraftfahrzeugbremse nach einem oder mehreren der vorhergehenden Ansprüche, **dadurch gekennzeichnet, dass** ein Lager (17) eine gesondert am Gehäuse montierbare Komponente, wie insbesondere beispielhaft einen Verschluss (14) umfasst.

19. Bremslastmesseinrichtung für eine Kraftfahrzeugbremse nach einem oder mehreren der vorhergehenden Ansprüche, **dadurch gekennzeichnet, dass** dem Lager (17) ein Elastoelement (15), wie insbesondere beispielhaft ein Federelement zugeordnet ist.

20. Bremslastmesseinrichtung für eine Kraftfahrzeugbremse nach einem oder mehreren der vorhergehenden Ansprüche, **dadurch gekennzeichnet, dass** ein Elastoelement (15) und/oder Federelement als ein Elastomerkörper, wie insbesondere als ein Elastomerring ausgebildet ist.

21. Bremslastmesseinrichtung für eine Kraftfahrzeugbremse nach einem oder mehreren der vorhergehenden Ansprüche, **dadurch gekennzeichnet, dass** ein Elastoelement (15) am Gehäuse, und/oder am Verschluss (14) und/oder am Kolben (9a,b) und/oder am Bremslastmessfühler (8a,b,c) vorgesehen ist.

22. Bremslastmesseinrichtung für eine Kraftfahrzeugbremse nach einem oder mehreren der vorhergehenden Ansprüche, **dadurch gekennzeichnet, dass** dem oder den Kolben (9a,b) zumindest ein Verdrehsicherungsmittel zugeordnet ist/sind, um unerwünschte Drehverstellung zu vermeiden.

23. Bremslastmesseinrichtung für eine Kraftfahrzeugbremse nach einem oder mehreren der vorhergehenden Ansprüche, **dadurch gekennzeichnet, dass** das Verdrehsicherungsmittel mittelbar oder unmittelbar zwischen Gehäuse des Bremsmesswiderlagers (7) und Kolben (9a,b) vorgesehen ist.

24. Bremslastmesseinrichtung für eine Kraftfahrzeugbremse nach Anspruch 22 oder 23, **dadurch gekennzeichnet, dass** das Verdrehsicherungsmittel zwischen Bremslastmessfühler (8) und Kolben (9a,b) vorgesehen ist.

25. Bremslastmesseinrichtung für eine Kraftfahrzeugbremse nach Anspruch 22 oder 23, **dadurch gekennzeichnet, dass** das Verdrehsicherungsmittel zwischen Verschluss (14) und Kolben (9b) vorgesehen ist.

26. Bremslastmesseinrichtung für eine Kraftfahrzeugbremse nach einem oder mehreren der vorhergehenden Ansprüche 22 - 25, **dadurch gekennzeichnet, dass** das Verdrehsicherungsmittel insbesondere formschlüssig am Kolben (9a,b) angreift, um eine relative Verdrehung eines oder beider Kolben (9a,b) zu vermeiden.

27. Bremslastmesseinrichtung für eine Kraftfahrzeugbremse nach einem oder mehreren der vorhergehenden Ansprüche, **dadurch gekennzeichnet, dass** ein Elastoelement (15) am Gehäuse, und/oder am Verschluss (14) und/oder am Kolben (9a,b) und/oder am Bremslastmessfühler (8a,b,c) vorgesehen ist.

28. Bremslastmesseinrichtung für eine Kraftfahrzeugbremse nach einem oder mehreren der vorhergehenden Ansprüche, **dadurch gekennzeichnet, dass** zwischen Kolben (9a,b) und Bremslastmessfühler (8a,b,c) zumindest ein Zentriermittel (20a,b) vorgesehen ist.

29. Bremslastmesseinrichtung für eine Kraftfahrzeugbremse nach einem oder mehreren der vorhergehenden Ansprüche, **dadurch gekennzeichnet, dass** der Bremslastmessfühler (8a,b,c), oder Komponenten davon, in Relation zu einer fluchtend zwischen den Bremsbacken 2a,2b gegeben definierten Achse A mit Distanzierung Δ derart im Bremsmesswiderlager (7) axial rückversetzt platziert vorgesehen ist, um dem Bremslastmessfühler (8a,b,c) oder dessen Komponenten Bauteilschutz zu ermöglichen.

30. Kraftfahrzeugtrommelbremse umfassend spreizbare Bremsbacken zur Interaktion mit einer Bremstrommel, umfassend wenigstens eine Spreizeinrichtung zwischen den Bremsbacken zwecks Bremsbetätigung, sowie umfassend ein dreh- und fahrzeugfest an einem Bremsstator fixierbares Lager zwischen den Bremsbacken, **dadurch gekennzeichnet, dass** das Lager als ein Bremsmesswiderlager ausgebildet ist, und über eine elektrische Bremslastmesseinrichtung mit den Merkmalen nach einem oder mehreren der Patentansprüche 1 - 29 verfügt.

31. Kraftfahrzeugtrommelbremse nach Anspruch 30, **dadurch gekennzeichnet, dass** die Kraftfahrzeugtrommelbremse als eine Fahrzeugbetriebsbremse oder als eine Fahrzeugkombibremse ausgebildet ist, welche zusätzlich über eine elektrische Feststellbremse verfügt.

32. Kraftfahrzeugtrommelbremse nach einem oder mehreren der Patentansprüche 30 oder 31, **dadurch gekennzeichnet, dass** die Trommelbremse als eine Simplex-Bremse, oder als eine Servo-Bremse oder als eine Dual-Mode-Trommelbremse ausgebildet ist

33. Montageverfahren für eine Bremslastmesseinrichtung für eine Kraftfahrzeugtrommelbremse nach einem oder mehreren der vorhergehenden Patentansprüche 1-32, **dadurch gekennzeichnet, dass** eine Komponentenmontage über zumindest drei Montagezustände/Montagestadien I,II,III verfügt, mit einseitig zentralisiert aufeinanderfolgender Komponentenzuführung, indem Bestandteile oder Komponenten des Bremsmesswiderlagers (7), wie insbesondere Kolben (9a,b), oder deren mittelbar oder unmittelbar zugeordnete Komponenten, sowie Bremslastmessfühler (8) oder dessen mittelbar oder unmittelbar zugeordnete Komponenten, ausschließlich einseitig zentral durch die Aufnahmelängsbohrung (19) des Bremsmesswiderlagers (7) nacheinander hindurch eingefügt sind.

34. Montageverfahren für eine Bremslastmesseinrichtung einer Kraftfahrzeugtrommelbremse umfassend die Merkmale nach einem oder mehreren der vorhergehenden Patentansprüche 1-32, **dadurch gekennzeichnet, dass** eine Komponentenmontage über zumindest drei Montagezustände/Montagestadien I,II,III verfügt, mit mehrseitig abwechselnd definierter Komponentenzuführung, indem die Kolben (9a,b), oder deren mittelbar oder unmittelbar zugeordnete Komponenten, von lateral seitlich ausgehend unmittelbar in die Aufnahmequerbohrung (16) eingefügt sind, und wobei ein Bremslastmessfühler (8) oder dessen mittelbar oder unmittelbar zugeordnete Komponenten, ausgehend von einer Öffnung der Aufnahmelängsbohrung (19) von unten, um 90° rechtwinklig zur Aufnahmequerbohrung (16) versetzt, durch die Aufnahmelängsbohrung (19) des Bremsmesswiderlagers (7) hindurch eingefügt sind.

## Claims

1. A brake load measuring device for a motor vehicle brake comprising an electric brake load sensor assembly, in particular brake measuring buttresses (7a,b,c) comprising a receptacle housing which is arranged rotationally-fixed and aligned between two brake-actuable brake shoes (2a,b), and is used as a bearing for the brake shoes (2a,b) which are arranged spaced apart and diametrically opposite to one another, by the housing having a continuous receptacle cross bore (16) arranged aligned with respect to lateral brake shoe supports, wherein two pistons (9a,b) which are received so they are spaced apart and are coaxially relatively movable, are guided in the receptacle cross bore, on each of which one of the brake shoes (2a,b) is seated, and comprising a brake load sensor system including brake load measuring probes (8a,b,c) with load tapping via the pistons (9a,b), **characterized in that** the brake load measuring probe (8a,b,c) is inserted into the receptacle cross bore (16) as an integral piston stop centrally and aligned between the pistons (9a,b) so it is relatively displaceable in such a way that the pistons (9a,b) are seated on the brake load measuring probe (8a,b,c) aligned with one another without offset and diametrically opposite to one another.

2. The brake load measuring device as claimed in claim 1, **characterized in that,** at least in a released braking state, the brake shoes (2a, b) clamp the brake load measuring probe (8a, b,c) between one another with an elastic preload force, in particular indirectly via the pistons (9a, b).

3. The brake load measuring device for a motor vehicle brake as claimed in claim 1 or 2, **characterized in that** the brake load measuring probe (8a,b,c) comprises an electric brake load sensor assembly (13), such as a load cell (13) in particular.

4. The brake load measuring device for a motor vehicle brake as claimed in any one or more of the preceding claims, **characterized in that** the brake load measuring probe (8a,b,c) has an elastic spring body.

5. The brake load measuring device for a motor vehicle brake as claimed in any one or more of the preceding claims, **characterized in that** the brake load measuring probe (8a,b,c) is inserted as a piston stop into the centre of the receptacle cross bore (16).

6. The brake load measuring device for a motor vehicle brake as claimed in any one or more of the preceding claims, **characterized in that** the brake load measuring probe (8a,b,c) is mounted in a receptacle longitudinal bore (19) of the housing.

7. The brake load measuring device for a motor vehicle brake as claimed in any one or more of the preceding claims, **characterized in that** the brake load sensor assembly (13) is provided on, at, or in the brake load measuring probe (8a,b,c), mounted within the receptacle cross bore (16).

8. The brake load measuring device for a motor vehicle brake as claimed in any one or more of the preceding claims, **characterized in that** the brake load measuring probe (8a,b,c) integrates the electric brake load sensor assembly (13).

9. The brake load measuring device for a motor vehicle brake as claimed in any one or more of the preceding claims, **characterized in that** the brake load measuring probe (8a, b, c) is configured as a deformation body having defined elasticity and having defined shaping, for example, having a defined cross section in particular.

10. The brake load measuring device for a motor vehicle brake as claimed in any one or more of the preceding claims, **characterized in that** the brake load measuring probe (8a,b,c) is constructed in multiple pieces.

11. The brake load measuring device for a motor vehicle brake as claimed in any one or more of the preceding claims, **characterized in that** the receptacle cross bore (16) of the housing is configured as a stepped through bore without a bottom.

12. The brake load measuring device for a motor vehicle brake as claimed in any one or more of the preceding claims, **characterized in that** the receptacle cross bore (16) is configured as a stepped bore having a diameter tapering successively in the feed direction of its longitudinal axis (A) in such a way that receptacle cross bore mouths each allocated spaced apart from one another on the end side each form, in relation to one another, a largest receptacle cross bore inner diameter di max and a smallest receptacle cross bore inner diameter di min of the housing.

13. The brake load measuring device for a motor vehicle brake as claimed in any one or more of the preceding claims, **characterized in that** the receptacle cross bore (16) is provided with a closure (14) on the end side in the area of the largest receptacle cross bore inner diameter, and wherein the closure (14) has a passage which is penetrated by a piston (9a,b).

14. The brake load measuring device for a motor vehicle brake as claimed in any one or more of the preceding claims, **characterized in that** a bearing (17), for the purpose of securing removal in the housing, is assigned to one or both pistons (9a, b).

15. The brake load measuring device for a motor vehicle brake as claimed in any one or more of the preceding claims, **characterized in that** a bearing (17) is form-fitting and encloses a stop on the piston (9a,b) and/or a stop on the housing.

16. The brake load measuring device for a motor vehicle brake as claimed in any one or more of the preceding claims, **characterized in that** a bearing (17) is present on the piston circumferential side, in particular as a projection, step, or shoulder which is suitable and intended to cooperate in a formfitting manner with an associated buttress.

17. The brake load measuring device for a motor vehicle brake as claimed in any one or more of the preceding claims, **characterized in that** a bearing (17) comprises a component installable separately on the piston (9a,b), such as a snap ring, by way of example, in particular.

18. The brake load measuring device for a motor vehicle brake as claimed in any one or more of the preceding claims, **characterized in that** a bearing (17) comprises a component installable separately on the housing, such as a closure (14), by way of example, in particular.

19. The brake load measuring device for a motor vehicle brake as claimed in any one or more of the preceding claims, **characterized in that** the bearing (17) is assigned an elastic element (15), such as a spring element, by way of example, in particular.

20. The brake load measuring device for a motor vehicle brake as claimed in any one or more of the preceding claims, **characterized in that** an elastic element (15) and/or spring element is formed as an elastomer body, such as an elastomer ring in particular.

21. The brake load measuring device for a motor vehicle brake as claimed in any one or more of the preceding claims, **characterized in that** an elastic element (15) is provided on the housing, and/or on the closure (14) and/or on the piston (9a,b) and/or on the brake load measuring probe (8a,b,c).

22. The brake load measuring device for a motor vehicle brake as claimed in any one or more of the preceding claims, **characterized in that** the piston or pistons (9a, b) is/are assigned at least one antirotation safeguard means in order to avoid undesired rotational adjustment.

23. The brake load measuring device for a motor vehicle brake as claimed in any one or more of the preceding claims, **characterized in that** the antirotation safeguard means is provided indirectly or directly between the housing of the brake measuring buttress (7) and the piston (9a,b).

24. The brake load measuring device for a motor vehicle brake as claimed in claim 22 or 23, **characterized in that** the antirotation safeguard means is provided between the brake load measuring probe (8) and the piston (9a,b).

25. The brake load measuring device for a motor vehicle brake as claimed in claim 22 or 23, **characterized in that** the antirotation safeguard means is provided between the closure (14) and the piston (9b).

26. The brake load measuring device for a motor vehicle brake as claimed in any one or more of preceding claims 22-25, **characterized in that** the antirotation safeguard means engages in particular in a form-fitting manner on the piston (9a, b) in order to avoid relative rotation of one or both pistons (9a, b).

27. The brake load measuring device for a motor vehicle brake as claimed in any one or more of the preceding claims, **characterized in that** an elastic element (15) is provided on the housing, and/or on the closure (14) and/or on the piston (9a,b) and/or on the brake load measuring probe (8a,b,c).

28. The brake load measuring device for a motor vehicle brake as claimed in any one or more of the preceding claims, **characterized in that** at least one centring means (20a,b) is provided between the piston (9a,b) and the brake load measuring probe (8a,b,c).

29. The brake load measuring device for a motor vehicle brake as claimed in any one or more of the preceding claims, **characterized in that** the brake load measuring probe (8a,b,c), or components thereof, in relation to a defined axis A provided aligned between the brake shoes 2a, 2b with a distance Δ, is provided such that it is set back to the rear axially in the brake measuring buttress (7) so as to enable component protection for the brake load measuring probe (8a,b,c) or the components thereof.

30. A motor vehicle drum brake comprising expandable brake shoes for interacting with a brake drum, comprising at least one expansion device between the brake shoes for brake actuation, and comprising a bearing between the brake shoes, which bearing can be fixed rotationally fixed and to the vehicle to a brake stator, **characterized in that** the bearing is designed as a brake measuring buttress, and has an electric brake load measuring device having the features as claimed in any one or more of claims 1 - 29.

31. The motor vehicle drum brake as claimed in claim 30, **characterized in that** the motor vehicle drum brake is designed as a vehicle service brake or as a vehicle combination brake, which additionally has an electric parking brake.

32. The motor vehicle drum brake as claimed in any one or more of claims 30 and 31, **characterized in that** the drum brake is designed as a simplex brake, or as a servo brake, or as a dual-mode drum brake.

33. An assembly method for a brake load measuring device for a motor vehicle drum brake as claimed in any one or more of the preceding patent claims 1-32, **characterized in that** a component assembly has at least three assembly states/assembly stages I,II,III, with one-sided centralized successive component supply, by parts or components of the brake measuring buttress (7), such as in particular pistons (9a,b), or their indirectly or directly assigned components, as well as the brake load measuring probe (8) or its indirectly or directly assigned components, being inserted exclusively on one side centrally through the receptacle longitudinal bore (19) of the brake measuring buttress (7) in succession.

34. An assembly method for a brake load measuring device for a motor vehicle drum brake comprising the features as claimed in any one or more of preceding claims 1-32, **characterized in that** a component assembly has at least three assembly states/assembly stages I,II,III, with multisided alternating defined component supply, by the pistons (9a,b), or their indirectly or directly assigned components, being inserted directly into the receptacle cross bore (16) starting from a lateral position, and wherein a brake load measuring probe (8) or its indirectly or directly assigned components, being inserted through the receptacle longitudinal bore (19) of the brake measuring buttress (7) starting from an opening of the receptacle longitudinal bore (19) from below, offset by 90° perpendicular to the receptacle cross bore (16).

## Revendications

1. Dispositif de mesure de charge de freinage pour frein de véhicule à moteur, présentant un ensemble capteur électrique de charge de freinage, en particulier une butée de mesure de freinage (7a, b, c) comprenant un boîtier récepteur disposé de manière solidaire en rotation et aligné entre deux mâchoires de frein (2a, b) pouvant être actionnées, et qui sert de palier pour les mâchoires de frein (2a, b) disposées de manière espacée et diamétralement opposée l'une par rapport à l'autre, le boîtier comportant un alésage transversal de réception continu (16) aligné avec les supports latéraux des mâchoires de frein, dans lequel deux pistons (9a, b) espacés de manière coaxiale et mobiles l'un par rapport à l'autre sont guidés dans l'alésage transversal de réception, sur chacun desquels est montée une des mâchoires de frein (2a, b), et comprenant des capteurs de charge de freinage, y compris des capteurs de mesure de charge de freinage (8a, b, c) avec prise de charge par l'intermédiaire des pistons (9a, b), **caractérisé en ce que** le capteur de mesure de charge de freinage (8a, b, c) est inséré de manière intégrale comme butée de piston centrale et alignée entre les pistons (9a, b) de manière à pouvoir se déplacer relativement dans l'alésage transversal de réception (16), de sorte que les pistons (9a, b) reposent alignés l'un par rapport à l'autre, sans décalage et diamétralement opposés sur le capteur de mesure de charge de freinage (8a, b, c).

2. Dispositif de mesure de charge de freinage selon la revendication 1, **caractérisé en ce que,** au moins dans un état de frein relâché, les mâchoires de frein (2a, b), en particulier indirectement par l'intermédiaire des pistons (9a, b), serrent le capteur de mesure de charge de freinage (8a, b, c) entre elles avec une force de précharge élastique.

3. Dispositif de mesure de charge de freinage pour frein de véhicule à moteur selon la revendication 1 ou 2, **caractérisé en ce que** le capteur de mesure de charge de freinage (8a, b, c) comprend un ensemble capteur électrique de charge de freinage (13), tel que, en particulier, une cellule de charge (13).

4. Dispositif de mesure de charge de freinage pour frein de véhicule à moteur selon l'une ou plusieurs des revendications précédentes, **caractérisé en ce que** le capteur de mesure de charge de freinage (8a, b, c) possède un corps à ressort élastique.

5. Dispositif de mesure de charge de freinage pour frein de véhicule à moteur selon l'une ou plusieurs des revendications précédentes, **caractérisé en ce que** le capteur de mesure de charge de freinage (8a, b, c) est inséré comme butée de piston au centre de l'alésage transversal de réception (16).

6. Dispositif de mesure de charge de freinage pour frein de véhicule à moteur selon l'une ou plusieurs des revendications précédentes, **caractérisé en ce que** le capteur de mesure de charge de freinage (8a, b, c) est monté dans un alésage longitudinal de réception (19) du boîtier.

7. Dispositif de mesure de charge de freinage pour frein de véhicule à moteur selon l'une ou plusieurs des revendications précédentes, **caractérisé en ce que** l'ensemble capteur de charge de freinage (13) est prévu sur, au niveau de ou dans le capteur de mesure de charge de freinage (8a, b, c) et est monté dans l'alésage transversal de réception (16).

8. Dispositif de mesure de charge de freinage pour frein de véhicule à moteur selon l'une ou plusieurs des revendications précédentes, **caractérisé en ce que** le capteur de mesure de charge de freinage (8a, b, c) intègre l'ensemble capteur électrique de charge de freinage (13).

9. Dispositif de mesure de charge de freinage pour frein de véhicule à moteur selon l'une ou plusieurs des revendications précédentes, **caractérisé en ce que** le capteur de mesure de charge de freinage (8a, b, c) est conçu comme un corps de déformation avec une élasticité définie et une forme définie, en particulier avec une section transversale définie.

10. Dispositif de mesure de charge de freinage pour frein de véhicule à moteur selon l'une ou plusieurs des revendications précédentes, **caractérisé en ce que** le capteur de mesure de charge de freinage (8a, b, c) est constitué de plusieurs éléments.

11. Dispositif de mesure de charge de freinage pour frein de véhicule à moteur selon l'une ou plusieurs des revendications précédentes, **caractérisé en ce que** l'alésage transversal de réception (16) du boîtier est conçu comme un alésage traversant étagé sans fond.

12. Dispositif de mesure de charge de freinage pour frein de véhicule à moteur selon l'une ou plusieurs des revendications précédentes, **caractérisé en ce que** l'alésage transversal de réception (16) est conçu comme un alésage étagé avec des paliers de diamètre coniques successifs dans la direction d'avance de son axe longitudinal (A) de sorte que les ouvertures de l'alésage transversal de réception espacées l'une de l'autre au niveau des extrémités forment, l'une par rapport à l'autre, un diamètre intérieur d'alésage transversal de réception maximal di max et un diamètre intérieur d'alésage transversal de réception minimal di min du boîtier.

13. Dispositif de mesure de charge de freinage pour frein de véhicule à moteur selon l'une ou plusieurs des revendications précédentes, **caractérisé en ce que** l'alésage transversal de réception (16) est muni à son extrémité, dans la région du diamètre intérieur d'alésage transversal de réception maximal, d'une fermeture (14), et dans lequel la fermeture (14) comporte un passage à travers lequel un piston (9a, b) pénètre.

14. Dispositif de mesure de charge de freinage pour frein de véhicule à moteur selon l'une ou plusieurs des revendications précédentes, **caractérisé en ce qu'**un palier (17) est associé à un ou aux deux pistons (9a, b) afin d'empêcher tout démontage dans le boîtier.

15. Dispositif de mesure de charge de freinage pour frein de véhicule à moteur selon l'une ou plusieurs des revendications précédentes, **caractérisé en ce qu'**un palier (17) est à complémentarité de forme et inclut une butée sur le piston (9a, b) et/ou une butée sur le boîtier.

16. Dispositif de mesure de charge de freinage pour frein de véhicule à moteur selon l'une ou plusieurs des revendications précédentes, **caractérisé en ce qu'**un palier (17) est prévu sur le côté circonférentiel du piston, en particulier sous la forme d'une saillie, d'un étage ou d'un épaulement, qui est adapté et destiné à coopérer par complémentarité de forme avec une butée associée.

17. Dispositif de mesure de charge de freinage pour frein de véhicule à moteur selon l'une ou plusieurs des revendications précédentes, **caractérisé en ce qu'**un palier (17) comprend un composant pouvant être monté séparément sur le piston (9a, b), tel qu'un anneau élastique, à titre d'exemple particulier.

18. Dispositif de mesure de charge de freinage pour frein de véhicule à moteur selon l'une ou plusieurs des revendications précédentes, **caractérisé en ce qu'**un palier (17) comprend un composant pouvant être monté séparément sur le boîtier, tel qu'une fermeture (14), à titre d'exemple particulier.

19. Dispositif de mesure de charge de freinage pour frein de véhicule à moteur selon l'une ou plusieurs des revendications précédentes, **caractérisé en ce qu'**un élément élastique (15), tel qu'un élément à ressort à titre d'exemple particulier, est associé au palier (17).

20. Dispositif de mesure de charge de freinage pour frein de véhicule à moteur selon l'une ou plusieurs des revendications précédentes, **caractérisé en ce qu'**un élément élastique (15) et/ou un élément à ressort est conçu comme un corps en élastomère, en particulier comme un anneau en élastomère.

21. Dispositif de mesure de charge de freinage pour frein de véhicule à moteur selon l'une ou plusieurs des revendications précédentes, **caractérisé en ce qu'un** élément élastique (15) est prévu sur le boîtier et/ou sur la fermeture (14) et/ou sur le piston (9a, b) et/ou sur le capteur de mesure de charge de freinage (8a, b, c).

22. Dispositif de mesure de charge de freinage pour frein de véhicule à moteur selon l'une ou plusieurs des revendications précédentes, **caractérisé en ce qu'au** moins un moyen anti-rotation est associé au ou aux pistons (9a, b) afin d'éviter tout déplacement rotatif indésirable.

23. Dispositif de mesure de charge de freinage pour frein de véhicule à moteur selon l'une ou plusieurs des revendications précédentes, **caractérisé en ce que** le moyen anti-rotation est prévu indirectement ou directement entre le boîtier de la butée de mesure de freinage (7) et le piston (9a, b).

24. Dispositif de mesure de charge de freinage pour frein de véhicule à moteur selon la revendication 22 ou 23, **caractérisé en ce que** le moyen anti-rotation est prévu entre le capteur de mesure de charge de freinage (8) et le piston (9a, b).

25. Dispositif de mesure de charge de freinage pour frein de véhicule à moteur selon la revendication 22 ou 23, **caractérisé en ce que** le moyen anti-rotation est prévu entre la fermeture (14) et le piston (9b).

26. Dispositif de mesure de charge de freinage pour frein de véhicule à moteur selon l'une ou plusieurs des revendications précédentes 22 à 25, **caractérisé en ce que** le moyen anti-rotation vient en prise en particulier par complémentarité de forme sur le piston (9a, b) afin d'empêcher une rotation relative d'un ou des deux pistons (9a, b).

27. Dispositif de mesure de charge de freinage pour frein de véhicule à moteur selon l'une ou plusieurs des revendications précédentes, **caractérisé en ce qu'un** élément élastique (15) est prévu sur le boîtier et/ou sur la fermeture (14) et/ou sur le piston (9a, b) et/ou sur le capteur de mesure de charge de freinage (8a, b, c).

28. Dispositif de mesure de charge de freinage pour frein de véhicule à moteur selon l'une ou plusieurs des revendications précédentes, **caractérisé en ce qu'au** moins un moyen de centrage (20a, b) est prévu entre le piston (9a, b) et le capteur de charge de freinage (8a, b, c).

29. Dispositif de mesure de charge de freinage pour frein de véhicule à moteur selon l'une ou plusieurs des revendications précédentes, **caractérisé en ce que** le capteur de mesure de charge de freinage (8a, b, c), ou des composants de celui-ci, est prévu de manière à être placé en retrait axialement dans la butée de mesure de freinage (7) par rapport à un axe A défini comme étant aligné entre les mâchoires de frein 2a, 2b, avec un écartement Δ, afin de permettre la protection au niveau composants du capteur de mesure de charge de freinage (8a, b, c) ou de ses composants.

30. Frein à tambour pour véhicule à moteur comprenant des mâchoires de frein écartables destinées à interagir avec un tambour de frein, comprenant au moins un dispositif d'écartement entre les mâchoires de frein pour l'actionnement du frein, ainsi qu'un palier pouvant être fixé de manière rotative et solidaire du véhicule sur un stator de frein entre les mâchoires de frein, **caractérisé en ce que** le palier est conçu comme une butée de mesure de freinage et comporte un dispositif électrique de mesure de charge de freinage présentant les caractéristiques selon l'une ou plusieurs des revendications 1 à 29.

31. Frein à tambour pour véhicule à moteur selon la revendication 30, **caractérisé en ce que** le frein à tambour pour véhicule à moteur est conçu comme un frein de service pour véhicule ou comme un frein combiné pour véhicule, qui comporte également un frein de stationnement électrique.

32. Frein à tambour pour véhicule à moteur selon une ou plusieurs des revendications 30 ou 31, **caractérisé en ce que** le frein à tambour est conçu comme un frein simplex, ou comme un servofrein ou comme un frein à tambour à double mode

33. Procédé d'assemblage d'un dispositif de mesure de charge de freinage pour frein à tambour de véhicule à moteur selon l'une ou plusieurs des revendications précédentes 1 à 32, **caractérisé en ce qu'**un assemblage de composants comporte au moins trois états/étapes d'assemblage I, II, III, avec une alimentation successive et unilatéralement centralisée en composants, les éléments ou composants de la butée de mesure de freinage (7), tels qu'en particulier les pistons (9a, b), ou leurs composants associés directement ou indirectement, ainsi que le capteur de mesure de charge de freinage (8) ou ses composants associés directement ou indirectement, étant insérés l'un après l'autre exclusivement d'un seul côté et de manière centrale à travers l'alésage longitudinal de réception (19) de la butée de mesure de freinage (7).

34. Procédé d'assemblage d'un dispositif de mesure de charge de freinage pour frein à tambour de véhicule à moteur comprenant les caractéristiques selon l'une ou plusieurs des revendications précédentes 1 à 32, **caractérisé en ce qu'un** assemblage de composants comporte au moins trois états/étapes d'assemblage I, II, III, avec une alimentation en composants définie de manière alternée sur plusieurs côtés, les pistons (9a, b) ou leurs composants associés directement ou indirectement étant insérés directement dans l'alésage transversal de réception (16) à partir du côté latéral, et dans lequel un capteur de mesure de charge de freinage (8) ou ses composants associés directement ou indirectement sont insérés à partir d'une ouverture de l'alésage longitudinal de réception (19) par le bas, décalés de 90° par rapport à l'alésage transversal de réception (16), à travers l'alésage longitudinal de réception (19) de la butée de mesure de freinage (7).
